(19) **Europäisches Patentamt / European Patent Office / Office européen des brevets**

(11) **EP 3 587 622 B1**

(12) # EUROPEAN PATENT SPECIFICATION

(45) Date of publication and mention of the grant of the patent:
**27.09.2023 Bulletin 2023/39**

(21) Application number: **18757069.2**

(22) Date of filing: **21.02.2018**

(51) International Patent Classification (IPC):
**C25B 11/00** $^{(2021.01)}$

(52) Cooperative Patent Classification (CPC):
**C25B 11/03; C25B 1/04; C25B 9/19; C25B 9/73; C25B 11/0773; C25B 11/091;** Y02E 60/36

(86) International application number:
**PCT/JP2018/006276**

(87) International publication number:
**WO 2018/155503 (30.08.2018 Gazette 2018/35)**

(54) **POSITIVE ELECTRODE, POSITIVE ELECTRODE FOR WATER ELECTROLYSIS, ELECTROLYSIS CELL, AND METHOD FOR PRODUCING HYDROGEN**

POSITIVE ELEKTRODE, POSITIVE ELEKTRODE FÜR WASSERELEKTROLYSE, ELEKTROLYSEZELLE UND VERFAHREN ZUR HERSTELLUNG VON WASSERSTOFF

ÉLECTRODE POSITIVE, ÉLECTRODE POSITIVE POUR ÉLECTROLYSE DE L'EAU, CELLULE D'ÉLECTROLYSE ET PROCÉDÉ DE PRODUCTION D'HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2017 JP 2017030516**
**21.02.2017 JP 2017030517**

(43) Date of publication of application:
**01.01.2020 Bulletin 2020/01**

(73) Proprietor: **Asahi Kasei Kabushiki Kaisha**
**Tokyo 100-0006 (JP)**

(72) Inventors:
• **FUJII, Yuichi**
  **Tokyo 100-0006 (JP)**
• **HIRANO, Toshiyuki**
  **Tokyo 100-0006 (JP)**
• **FUJIMOTO, Norikazu**
  **Tokyo 100-0006 (JP)**
• **YOSHIDA, Jun**
  **Tokyo 100-0006 (JP)**
• **YAMAGUCHI, Tatsuo**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**WO-A1-2016/147720    WO-A1-2017/047792**
**WO-A1-2017/179473    JP-A- S49 105 941**
**JP-A- S57 200 581    JP-A- 2009 179 871**
**JP-A- 2015 025 151    JP-A- 2016 204 732**
**JP-A- 2016 204 745    US-A1- 2005 201 918**
**US-A1- 2016 369 412**

• **OSTROUSHKO, A.A. ET AL: "Formation of Morphology of Nickel Foam-Complex Oxide Coatings with the Perovskite Structure", JOURNAL OF SURFACE INVESTIGATION, vol. 9, no. 6, 2015, pages 1237-1242, XP002797859,**

**(Cont. next page)**

- EGELUND SUNE ET AL: "Manufacturing of a LaNiO3composite electrode for oxygen evolution in commercial alkaline water electrolysis", INTERNATIONAL JOURNAL OF HYDROGEN ENERGY, ELSEVIER SCIENCE PUBLISHERS B.V., BARKING, GB, vol. 41, no. 24, 24 May 2016 (2016-05-24), pages 10152-10160, XP029600020, ISSN: 0360-3199, DOI: 10.1016/J.IJHYDENE.2016.05.013

**Description**

TECHNICAL FIELD

The present disclosure relates to an anode, an anode for water electrolysis, a bipolar electrolysis cell comprising the anode for water electrolysis, and a method for producing hydrogen employing the anode for water electrolysis.

BACKGROUND

In recent years, hydrogen produced by utilizing renewable energy has attracted attention as clean energy for solving problems of global warming due to $CO_2$ and a reduction in the amount of deposit of fossil fuel, for example. Production of hydrogen utilizing renewable energy is demanded to be made at a low cost comparable with the cost of conventional production of hydrogen by reforming of fossil fuel. Therefore, production of hydrogen utilizing renewable energy is demanded to achieve a high energy efficiency and inexpensive facilities which have not been able to be accomplished in conventional art.

Methods for producing hydrogen which can meet the above demands include electrolysis of water (water electrolysis). For example, several designs have been proposed where hydrogen is produced by water electrolysis utilizing power generation using natural energy such as wind power or solar power, for storage and transportation thereof.

In electrolysis of water, electric current is applied to water to thereby generate oxygen in an anode and generate hydrogen in a cathode. One of primary factors of energy loss in electrolysis include overvoltages at anodes and cathodes. A reduction in overvoltages enables efficient production of hydrogen. In particular, anode overvoltages are higher than cathode overvoltages, and researches and developments have been widely made for reducing the anode overvoltages.

Some oxides having perovskite structures are known to have high oxygen-generating ability and have been expected as promising materials for anodes for water electrolysis (see Suntivich, J., *et al.* [NPL 1]). One of the techniques for employing an oxide having a perovskite structure as an anode for alkaline water electrolysis includes forming an oxide layer on the surface of a conductive substrate. For example, Singh *et al.* (NPL 2) discloses a method including spray-coating a heated substrate with a precursor solution followed by thermolysis, to thereby prepare an anode for water electrolysis in which a metal oxide having a perovskite structure is used.

Well-known techniques for obtaining solely an oxide having a high oxygen-generating ability with a desired perovskite structure typically include a coprecipitation and a technique including calcinating a raw material at a high temperature for long time. In addition, it is well-known that a homogeneous, finely-powered oxide can be obtained with the gel combustion method disclosed in JP2016-071967A (PTL 1). JP2009-179871A (PTL 2) and WO2014/147720 (PTL 3) disclose water electrolysis devices having electrodes prepared by immobilizing pre-synthesized oxide particles having perovskite structures on conductive substrates.

EGELUND SUNE ET AL: "Manufacturing of a laNiO3composite electrode for oxygen evolution in commercial alkaline water electrolysis", INTERNATIONAL JOURNAL OF HYDROGEN ENERGY, ELSEVIER SCIENCE PUBLISHERS B.V., BARKING, GB, vol. 41, no. 24, 24 May 2016 (2016-05-24), pages 10152-10160, XP029600020, ISSN: 0360-3199, DOI: 10.1.016/J.ITIIYDF.NE.2016.05.013 discloses $LaNiO_3$ (perovskite) composite electrode for oxygen evolution in alkaline water electrolysis. The coating made of Ni and perovskite, which is single oxide phase, is deposited on a perforated substrate made of stainless steel. This coating results in the reduction of OER overpotential by 70 mV.

WO 2016/147720 discloses an air-electrode or water-electrolysis anode showing a higher catalytic activity than carbon black and not having a risk of oxidative degradation, in particular, an air-electrode or water-electrolysis anode for a metal-air battery or a water-electrolysis apparatus. The air-electrode or water-electrolysis anode includes an electron-conductive material represented by $LaNi_{1-x-y}Cu_xFe_yO_3$- (wherein x > 0, y > 0, x + y < 1 , and $0 \leq \sigma \leq 0.4$).

CITATION LIST

Patent Literature

    PTL 1: JP2016-071967A
    PTL 2: JP2009-179871A
    PTL 3: WO2014/147720

Non-patent Literature

NPL 1: Suntivich, J., et al. (2011). NPL 1: Suntivich, Jin, et al. "A perovskite oxide optimized for oxygen evolution catalysis from molecular orbital principles." Science 334.6061 (2011): 1383-1385.

NPL 2: Singh, S. P., et al. "Physicochemical and electrochemical characterization of active films of LaNiO3 for use as anode in alkaline water electrolysis." International journal of hydrogen energy 20.3 (1995): 203-210.

SUMMARY

(Technical Problem)

Since oxide layers in anodes disclosed in NPL 2, however, also contain metal oxides having low oxygen-generating abilities generated due to thermolysis, other than oxides in perovskite structures, overvoltage of such oxide layers is not low enough. In addition, electrodes disclosed in PTLs 2 and 3 contain polymer binders for immobilizing oxide particles with perovskite structures on conductive substrates. Accordingly, the matrix between particles has low conductivity, which serves as one of factors suppressing a reduction of the overvoltage. Furthermore, since the polymer binder components degrade, resulting in detachment of particles during long-term electrolysis, the durability of the electrodes may be insufficient.

The present embodiment has been made in view of such problems, and an object thereof is to provide an anode for water electrolysis, which is low in the overvoltage in oxygen generation and which has a high durability even in electrolysis using an energy unstably supplied, such as natural energy, as well as a method for producing the anode.

(Solution to Problem)

In order to solve the above-identified issues, we have made intensive studies and conducted numerous experiments. As a result, we have obtained an anode for water electrolysis having a low oxygen overvoltage and a high durability by forming a metal oxide layer with a high content of perovskite oxide in the crystalline constituent thereof, on or above the surface of a porous nickel substrate, thereby completing the present disclosure.

(Advantageous Effect)

In accordance with the present disclosure, an anode for water electrolysis is provided which has a low oxygen overvoltage, and is excellent in durability and is inexpensive, as well as a water electrolysis cell including this anode for water electrolysis.

BRIEF DESCRIPTION OF THE DRAWINGS

In the accompanying drawings:

FIG. 1 is a side view generally illustrating an example of a bipolar electrolyzer including bipolar electrolytic cells for water electrolysis according to an embodiment of the disclosure;

FIG. 2 is a cross-sectional view illustrating the inside of an electrolytic cell in a portion enclosed by broken line in FIG. 1 of a bipolar electrolyzer including bipolar electrolytic cells for water electrolysis according to the present embodiment;

FIG. 3 illustrates the outline of an electrolysis device used in Examples and Comparative Examples; and

FIG. 4 illustrates the outline of a bipolar electrolyzer used in an electrolytic test.

DETAILED DESCRIPTION

The following provides a detailed description of an embodiment of this disclosure (hereinafter, referred to as the "present embodiment"). The following present embodiment is illustrative for describing the present disclosure.

(Anode for water electrolysis)

In the present embodiment, an anode for water electrolysis comprises a metal oxide layer containing at least a perovskite-structured metal oxide on or above a part of a surface or an entire surface of a porous nickel substrate.

In a first characteristic of the present embodiment, a porous nickel substrate is used for the substrate.

The porous nickel substrate is a plate-like substrate which is formed by nickel or a material mainly containing nickel and has a large number of pores. Examples of the material mainly containing nickel include nickel-based alloys such as Monel, Inconel and Hastelloy. Specific forms thereof include an expanded metal, a punching metal, a plain-woven mesh, a foamed metal, or a similar form thereof.

The material of the porous substrate is nickel or a material mainly containing nickel. Nickel or a material mainly containing nickel is preferable in terms of durability, conductivity and cost efficiency because they are metals which are not dissolved even at an oxygen-generating potential in an alkali aqueous solution and are inexpensively available compared to noble metals.

The porous nickel substrate is preferably an expanded metal including nickel or the material mainly containing nickel. The dimension of the substrate is not particularly limited, yet in order to achieve both an increase in gas generation amount by means of increasing the electrolytic surface area and efficient removal of gas generated by electrolysis from the electrode surface, and from the perspective of the mechanical strength, it is preferable that the short way of mesh (SW) is 2 mm or more and 5 mm or less, the long way of mesh (LW) is 3 mm or more and 10 mm or less, the thickness is 0.2 mm or more and 2.0 mm or less, and the aperture ratio is 20% or more and 80% or less. More preferably, the SW is 3 mm or more and 4 mm or less, the LW is 4 mm or more and 6 mm or less, the thickness is 0.8 mm or more and 1.5 mm or less, and the aperture ratio is 40% or more and 60% or less.

In a second characteristic of the present embodiment, the proportion of the perovskite metal oxide in crystalline constituent(s) in the metal oxide layer is 90% or more and 100% or less.

Here, the proportion of the metal oxide in the crystalline constituent(s) can be calculated as a simplified method as follows.

An anode for water electrolysis is analyzed with X-ray diffraction, and the composition of the crystalline constituent(s) in the metal oxide layer is identified from the resultant X-ray diffraction pattern and known information of the locations and intensities of diffraction peaks. If multiple crystalline constituents are found, the proportion of a perovskite metal oxide in these crystalline constituents is calculated from the maximum peak intensity among peaks of each crystalline constituent in the metal oxide layer. A peak from nickel or nickel oxide may be observed because the substrate contains nickel. Such a peak, however, is not from crystalline constituent(s) in the metal oxide layer and is therefore ruled out from the calculation.

If any compound is present in the metal oxide layer other than a perovskite metal oxide having a high oxygen-generating ability and a good conductivity, the oxygen generation reaction is inhibited or the resistivity of the oxide layer increases, which prohibits provision of a low overvoltage. In addition, if any compound other than a perovskite metal oxide is present, this compound may be exposed to the oxygen-generating potential or may undergo redox reaction induced when electrolysis is halted and resumed, which may reduce the performance of the electrodes. From these reasons, the proportion of a perovskite metal oxide in the crystalline constituent(s) in the metal oxide is preferably 90% or more and 100% or less.

Furthermore, in the present embodiment, the proportion of the perovskite metal oxide in the metal oxide layer in the anode for water electrolysis remains high after long-term use, and the content of the perovskite metal oxide in the crystalline constituent(s) in the metal oxide layer after an energization of 100 hours or longer at an oxygen-generating potential is preferably 80% by mass or more and 95% by mass or less.

Examples of the method of obtaining a perovskite metal oxide include the so-gel method, coprecipitation, solid phase synthesis, and the gel combustion method, for example. Of these, the gel combustion method is the technique that provides highly-pure crystals with minute crystalline sizes.

The gel combustion method comprises subjecting a combustible gel containing a metal salt having an oxidizable ligand and a metal salt having a combustible ligand to thermal treatment, to induce instant thermolysis of the combustible gel thereby obtaining homogeneous and fine oxide powder.

A method utilizing the gel combustion method as an example of a method for obtaining metal oxide powder, i.e., a method for obtaining a metal oxide layer of the present disclosure, will be described.

Examples of the metal salt having an oxidizable ligand include nitrates and sulfates, for example. Examples of the metal salt having a combustible ligand include citrates, acetates, glycinates, and oxalates, for example. These salts may be anhydrites or hydrates. The most preferable combination is a nitrate as the metal salt having an oxidizable ligand and an acetate as the metal salt having a combustible ligand.

A perovskite-structured metal oxide can be formed on a surface of a porous substrate by means of the gel combustion method for crystal formation by preparing an aqueous solution containing a metal salt having an oxidizable ligand and a metal salt having a combustible ligand, as described above, in a given proportion (described later); removing water from the aqueous solution to obtain homogeneous combustible gel; and thermally treating the combustible gel.

A metal oxide layer or a precursor layer in a homogeneous perovskite structure can be formed on a surface of a porous substrate employing the above gel combustion method by applying an aqueous solution containing a metal salt having an oxidizable ligand and a metal salt having a combustible ligand in a given proportion on the porous substrate; and allowing the combustible gel to thermolyze by thermal treatment.

As the given proportion of the metal salt concentrations in the metal salt aqueous solution, the total concentration of the metal salt having an oxidizable ligand and the metal salt having a combustible ligand is preferably 0.1% by mass to 50% by mass, and more preferably 0.5% by mass to 30% by mass. The aqueous solution applied on the substrate can be gellized by exposing the substrate having the aqueous solution applied thereon in an atmosphere at 50°C to 150°C in time duration ranging from 3 minutes to 1 hour.

The gellized combustible gel is then subjected to a thermal treatment to synthesize a metal oxide, and the combustible gel is preferably treated at temperatures ranging from 300°C to 700°C. The time duration of the thermal treatment ranges preferably from 3 minutes to 1 hour, and more preferably from 5 minutes to 20 minutes. The thermolysis temperature of the combustible gel is about 300°C, and thus heating is required to be conducted at 300°C or higher. If the temperature of the thermal treatment is too high, oxidation of the substrate is accelerated and a resistive oxide film grows, which increases the oxygen overvoltage. Therefore, the temperature is preferably 700°C or lower, more preferably 600°C or lower, and even more preferably 500°C or lower. The cooling rate after the thermal treatment can be set arbitrary.

A metal oxide layer of obtained under the above gellization and combustion conditions typically satisfies the above-described requirements for the counts of pores having a diameter of 1 $\mu$m or more and particles having a diameter of 1 $\mu$m.

The metal oxide layer of the present embodiment is formed by directly converting metal salts into a metal oxide on a porous substrate, and accordingly a homogeneous and durable metal oxide layer is provided.

The steps of application of the aqueous solution on a substrate surface and thermal treatment may be repeated in order to obtain a metal oxide layer in a desired thickness.

After repeating the steps of application of the aqueous solution on a substrate surface and thermal treatment, an additional thermal treatment may be performed for improving the crystal property of the metal oxide layer. The additional thermal treatment is preferably performed at temperatures ranging from 500°C to 700°C for promoting crystal growth. The time duration of the thermal treatment ranges preferably from 5 minutes to 300 minutes, and more preferably from 10 minutes to 120 minutes.

In general, a perovskite-structured metal oxide has a composition represented by $ABO_3$.

The A-site element may be at least one element selected from the group consisting of alkali earth metal and rare earth elements, and the A-site element preferably contains, but is not limited to, La (described later).

The B-site element may be at least one element selected from the group consisting of Ni, Cr, Mn, Fe, Co, Cu, Nb, Y, Sb, Ti, Zr, Zn, and Ta.

The number of O (oxygen) in $ABO_3$ is not limited to 3, and may be any number that satisfies the valency conditions of the element in A-site and the B-site element.

In the present embodiment, the perovskite-structured metal oxide contains Ni, which can form a stable oxide at an oxygen-generating potential, arranged in at least a part of the B-site, thereby providing a high durability. The element to be located in the B-site together with Ni is preferably Cr, Mn, Fe, Co, Cu, Nb, Y, Sb, Ti, Zr, Zn, or Ta. The arrangement of such an element has advantages of an improved oxygen conductivity and an increase oxygen-generating ability. In the case where Ni, Cr, Mn, Fe, Co, Cu, Nb, Y, Sb, Ti, Zr, Zn, or Ta is arranged at the B-site, at least one or more alkali earth metal and/or rare earth elements are arranged at the A-site to form a perovskite crystal structure. The composition is represented by the following Formula (1):

$$A_x A'_{(1-x)} Ni_y B'_{(1-y)} O_{(3-z)} \cdots \qquad (1)$$

(In Formula (1), A and A' are independently an alkali earth metal or rare earth element, B' is at least one selected from Cr, Mn, Fe, Co, Cu, Nb, Y, Sb, Ti, Zr, Zn, and Ta, x satisfies $0 \leq x \leq 1$, y satisfies $0 < y \leq 1$, and z satisfies $0 < z \leq 1$).

In the structure of Formula (1), the A-site preferably contains La. The A-site may be constituted by only a rare-earth element, or may be constituted by a plurality of elements including a rare-earth element. For example, the Ln at A-site can be mainly a rare-earth element and can be partially replaced with an alkali earth metal element such as Sr or Ba, for example, thereby an improvement in conductivity can be expected. The proportion of the element(s) constituting the A-site is not limited.

In the structure of Formula (1) where the B-site contains Ni, a high oxygen-generating ability can be provided in more stable manner by controlling the valence of Ni so as to be within an appropriate range. The valence of Ni is preferably 2.5 or more and less than 3.0.

Examples of techniques for determining the valence of Ni include techniques employing X-ray photoelectron spectroscopy (XPS) and a thermal analysis.

For example, the valence of Ni can be determined with thermal analysis in the following procedure. A metal oxide layer is peeled off from a porous nickel substrate to obtain metal oxide powder. When the metal oxide powder, after completely dried, is analyzed with a thermo gravimeter/differential thermal analyzer, an increase in the weight may be confirmed during heating. This increase in the weight can be attributed to oxygen atoms filled in vacant oxygen sites in the metal oxide during the heating. Thus, the quotient obtained by dividing the increase in the weight with the number of oxygen atoms represents the number of previously-deficient oxygen atoms in the metal oxide, namely, z in Formula (1). The valence X of nickel in a perovskite compound as one represented by Formula (1) can be determined from the following formula:

$$\text{Valence X of nickel} = (3 - z) \times 2 - 3.$$

Examples of the method to control the valence of Ni include method of calcinating a metal oxide layer in a reducing atmosphere, such as those of hydrogen or propylene, a method of applying a coating liquid containing organic substance, such as oxalic acid or cellulose, on a substrate and calcinating the substrate, for example.

In Formula (1), the value of x may be 0 or more and 1 or less. In Formula (1), the value of y is required to be more than 0 and 1 or less, preferably 0.2 or more, more preferably 0.4 or more, even more preferably 0.5 or more. The value of z may be more than 0 and 1 or less.

The A-site element and the B-site element may be individually selected as appropriate for obtaining the effects of the present disclosure.

Particularly preferred combinations of the A-site and B-site elements include La/Ni, La/Cu, La/Ti, La/Nb, La/Ta, Ba/Ni, Ce/Ni, and Ca/Ni.

As an electrolysis reaction of water progresses, an electric double layer is formed on the surfaces of each electrode. If the capacitance of the electric double layer (hereinafter referred to as "double layer capacitance") is small, the reactive active sites are reduced and a low overvoltage cannot be attained. On the other hand, if the amount of the metal oxide attached is too high in an attempt to increase the double layer capacitance, the mechanical strength of the catalyst layer decreases and the durability may decrease. Therefore, in the present embodiment, the double layer capacitance of the anode for water electrolysis is 0.15 $F/cm^2$ or more and 1.5 $F/cm^2$ or less, and preferably 0.2 $F/cm^2$ or more and 0.8 $F/cm^2$ or less.

Here, the double layer capacity can be measured by, for example, an electrochemical impedance method. The double layer capacity is calculated by analyzing the Cole-Cole plot obtained by plotting real and imaginary components from AC impedance measurement using equivalent circuit fitting.

A further characteristic of the present embodiment (for example, any of (1) to (21) above) may be in that the metal oxide layer assumes a porous structure in which smaller-diameter particles are densely aggregated. In other words, the layer has a porous structure in which nanometer-scale minute pores are connected to each other.

As an electrolysis reaction of water progresses, an electric double layer is formed on the surfaces of each electrode. If the capacitance of the electric double layer (hereinafter referred to as "double layer capacitance") is small, the reactive active sites are reduced and a low overvoltage cannot be attained. For achieving a high double layer capacitance, electrodes are required to have large surface areas. However, presence of a number of large pores undermines the mechanical strength of the oxide layer and impairs the durability. Presence of a number of large pores also requires formation of a thick oxide layer, which reduces the mechanical strength and is also economically disadvantageous.

Accordingly, in the present embodiment (for example, any of (1) to (21) above), preferably a count of pores having a diameter of 1 $\mu$m or more in the metal oxide layer per 100 $\mu m^2$ thereof is 5 or less, and preferably a count of particles having a diameter of 1 $\mu$m or more in the metal oxide layer per 100 $\mu m^2$ thereof is 5 or less.

In addition, preferably, a count of pores having a diameter of 1 $\mu$m or more in the metal oxide layer per 100 $\mu m^2$ thereof is 5 or less, and the anode for water electrolysis has a double layer capacitance of 0.15 $F/cm^2$ or more and 1.5 $F/cm^2$ or less; or a count of particles having a diameter of 1 $\mu$m or more in the metal oxide layer per 100 $\mu m^2$ thereof is 5 or less, and the anode for water electrolysis has a double layer capacitance of 0.15 $F/cm^2$ or more and 1.5 $F/cm^2$ or less.

The most preferably, the metal oxide layer satisfies both the above pore condition and the above particle condition, that is, the count of pores having a diameter of 1 $\mu$m or more in the metal oxide layer per 100 $\mu m^2$ thereof is 5 or less and the count of particles having a diameter of 1 $\mu$m or more in the metal oxide layer per 100 $\mu m^2$ thereof is 5 or less, and the anode for water electrolysis has a double layer capacitance of 0.15 $F/cm^2$ or more and 1.5 $F/cm^2$ or less.

Here, pores having a diameter of 1 $\mu$m or more can be identified by taking a picture of the cross-section and measuring diameters of pores. A catalyst layer is cut in the thickness direction and a picture of the cross-section is then taken. The preparation of the cross-section can be done by a cross section polisher (CP) technique by means of broadly-radiated argon ion beam, for example. This technique can minimize the structural change caused by the cutting process, and enables observations of a cross-sectional structure that is close to *in situ* observations. This cross-section is then observed under an SEM with a magnification of $\times$ 1500 to obtain a picture of the cross-section. For each pore observed in the cross-sectional picture, the smallest circle encompassing the pore is drawn. The circle contacts with the contour of the pore at 2 or more points. The distance of every two contact points is measured, and the maximum distance between the contact points is determined as the diameter of the pore. In the present disclosure, the count of pores having a diameter of 1 $\mu$m or more per unit area is important.

In the present disclosure, the count of pores having a diameter of 1 $\mu$m or more per 100 $\mu m^2$ thereof is preferably 3 or less.

Here, particles having a diameter of 1 $\mu$m or more can be identified by taking a picture of the cross-section and measuring diameters of particles. The cross-section is processed in the above-described method, and the cross-section is then observed under an SEM with a magnification of ×5000 to obtain a picture of the cross-section. For each particle without a pore of a diameter of 100 nm or more observed in the cross-sectional picture, the smallest circle encompassing the particle is drawn. The circle contacts with the contour of the particle at 2 or more points. The distance of every two contact points is measured, and the maximum distance between the contact points is determined as the diameter of the particle. Also in particles, the count of particles per unit area is important.

The nano-porous structure as used in the present disclosure refers to a structure that is constituted from aggregated particles and has small pores with diameters of less than 1 μm.

The ranges of the count of pores having a diameter of 1 μm or more, the range of the count of particles having a diameter of 1 μm or more, and the range of double layer capacitance of the anode for water electrolysis may be individually selected as appropriate for obtaining the effects of the present disclosure.

If the thickness of the metal oxide layer is too high, an increase in electric resistance may be caused to result in an increase in overvoltage, and on the contrary, if the thickness is too low, the metal oxide may be dissolved or dropped off due to a long-term electrolysis and/or the stoppage of electrolysis, thereby causing electrode degradation to result in an increase in overvoltage.

For those reasons, the thickness of the metal oxide layer is preferably 1 μm or more and 50 μm or less, and more preferably 3 μm or more and 30 μm or less.

Note that the thickness of the metal oxide layer can be measured by, for example, observing the cross-section of the electrode under an electron microscope. Specifically, the cross-section of an electrode is observed under an electron microscope. The thickness of the metal oxide layer is measured at five points, and the average of measurement values at such five points is defined as the thickness of the metal oxide layer.

In the present embodiment, a nickel oxide layer can also be further provided between the porous nickel substrate and the metal oxide layer, thereby enhancing the durability of the anode for water electrolysis.

A base structure of the perovskite structure, which is the crystal structure of the metal oxide, is a cubic structure. A layer of nickel oxide having a cubic structure as a base structure as in the metal oxide layer is interposed between the porous nickel substrate and the metal oxide layer, thereby enhancing the adhesiveness between the porous nickel substrate and the metal oxide layer.

In order to enhance such adhesiveness, the thickness of the nickel oxide layer is preferably 0.1 μm or more, and more preferably 0.2 μm or more. On the other hand, if the nickel oxide layer is too thick, an increase in electric resistance may be caused to result in an increase in overvoltage, and therefore the thickness of the nickel oxide layer is preferably 1.0 μm or less, and more preferably 0.8 μm or less. The thickness of the nickel oxide layer can be suitably adjusted by adjusting the calcination temperature and the calcination time.

Note that the thickness of the nickel oxide layer can be measured by, for example, observing the cross-section of the electrode under an electron microscope. Specifically, the cross-section of an electrode is observed under an electron microscope. The thickness of the nickel oxide layer is measured at five points, and the average of measurement values at such five points is defined as the thickness of the nickel oxide layer.

The metal oxide layer preferably has pores for increasing the electrolysis area. On the other hand, if there are too many pores, the mechanical strength decreases and the durability may decrease. Thus, the porosity is preferably 10% or more and 40% or less. The porosity is more preferably 20% or more and 30% or less.

Here, the porosity of the metal oxide layer can be determined from an SEM image of the cross-section of the catalyst layer obtained in the above procedure using image analysis software.

In the present embodiment (for example, any of (1) to (21) above), a metal oxide layer having large porosity and high mechanical strength can be formed by making metal oxide particles having small primary grain sizes to be aggregated. In general, grain boundaries in conductive metal oxide, however, hinders activities of conductive carriers and the conductivity of the conductive metal oxide is reduced. Therefore, preferably, the metal oxide layer contains particles having an average primary grain size of 10 nm or more and 500 nm or less, and the crystalline size D (hkl) of the metal oxide is 5 nm or more and 50 nm or less.

Here, the average primary grain size can be determined from an SEM image of the cross-section of the catalyst layer obtained in the above procedure using image analysis software. More specifically, an electrode surface is observed under an SEM at a magnification where metal oxide particles are visible, and the image is binarized using image analysis software. An absolute maximum length of each of 10 non-coagulated inorganic particles is measured, and the number-average of the maximum lengths is determined as the average primary grain size.

The crystalline size D (hkl) can be calculated according to the Scherrer's equation:

$$D\ (hkl) = 0.9\ \lambda/(\beta 1/2 \cdot \cos\theta),$$

where hkl represents the miller index, λ represents the wavelength of characteristic X-ray (nm), β1/2 represents the half-power band width (radian) of the (hkl) plane, and θ represents the X-ray reflection angle (°). Accordingly, the average crystalline size D of the metal oxide having a composition represented by Formula (1), included in the metal oxide layer, can be determined by measuring the half-power band width $\beta1/2$ of the (hkl) plane, corresponding to an X-ray diffraction peak having the maximum intensity among the X-ray diffraction peaks of the metal oxide.

In the present embodiment, if the adhesion amount of the metal oxide is too large, an increase in electric resistance may be caused to result in an increase in overvoltage, and therefore the adhesion amount of the metal oxide is preferably 300 $g/m^2$ or less, and more preferably 200 $g/m^2$ or less. On the other hand, if the adhesion amount of the metal oxide having a composition represented by Formula (1) is too small, the metal oxide may be dissolved or dropped off due to a long-term electrolysis and/or the stoppage of electrolysis, thereby causing electrode degradation to result in an increase in overvoltage, and therefore the adhesion amount of the metal oxide attached is preferably 20 $g/m^2$ or more, and more preferably 30 $g/m^2$ or more.


(Electrolyzer for alkaline water electrolysis)

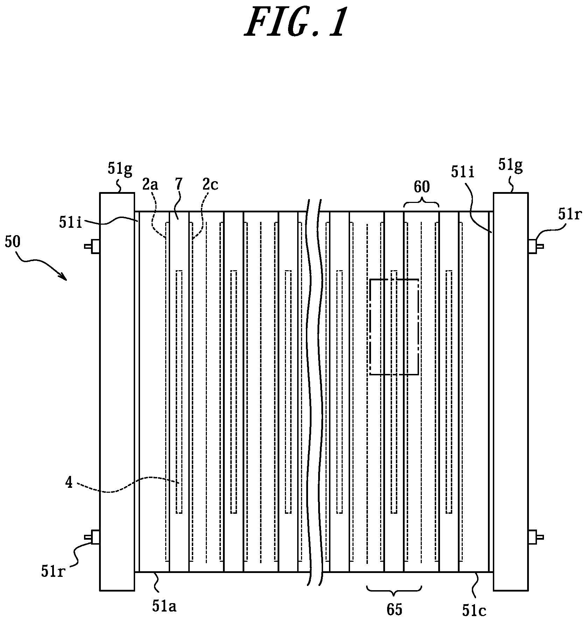

FIG. 1 is a side view generally illustrating an example of a bipolar electrolyzer including bipolar electrolytic cells for water electrolysis according to the present embodiment.

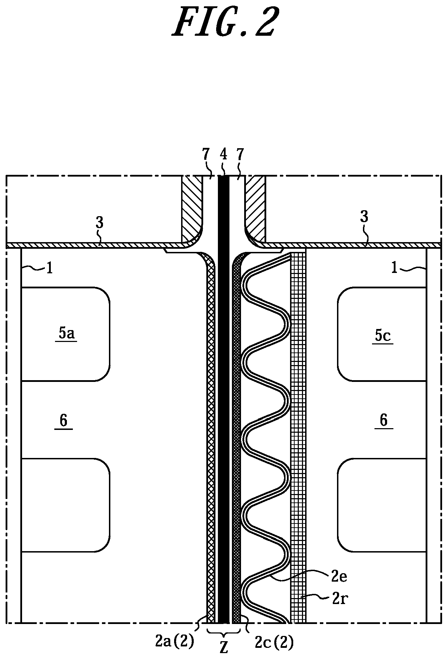

FIG. 2 illustrates a zero-gap structure (a cross-sectional view of a portion enclosed by broken line in FIG. 1) of an example of a bipolar electrolyzer including bipolar electrolytic cells for water electrolysis according to the present embodiment.

As illustrated in FIGS. 1 and 2, a bipolar electrolyzer 50 according to the present embodiment preferably comprises: an anode 2a; a cathode 2c; a partition wall 1 separating the anode 2a from the cathode 2c; and an outer frame 3 bordering the partition wall 1 in which a plurality of elements 60 are overlapped one another with a membrane 4 interposed therebetween.

Further, in the bipolar electrolyzer 50 of the present embodiment, the membrane 4 is in contact with the anode 2a and the cathode 2c to form a zero-gap structure Z (see FIG. 2).

The bipolar electrolyzer of the present embodiment may be a monopolar type or a bipolar type, and is preferably a bipolar electrolyzer for alkaline water electrolysis in which bipolar elements are stacked on top of one another via the corresponding membranes.

The monopolar method is a method of directly connecting each of one or more elements to a power supply, while the bipolar method is a method of arranging a large number of bipolar elements in series and connecting elements at both ends to a power supply.

In the present embodiment, as illustrated in FIG. 1, the bipolar type electrolyzer 50 is constructed by stacking the required number of bipolar elements 60.

In the example of the bipolar electrolyzer 50 illustrated in FIG. 1, a fast head 51g, an insulating plate 51i, and an anode terminal element 51a are arranged in order from one end, and an anode-side gasket portion, a membrane 4, a cathode side gasket portion, and a bipolar element 60 are arranged side by side in this order. In this case, each bipolar element 60 is arranged such that the cathode 2c faces toward the anode terminal element 51a side. Components from anode-side gasket portions up to bipolar elements 60 are repeatedly arranged as many times as required for the designed production quantity. After the required number of components from anode gaskets up to bipolar elements 60 are repeatedly arranged, an anode-side gasket portion, a membrane 4, and a cathode-side gasket portion are arranged again, and finally a cathode terminal element 51c, an insulating plate 51i, and a loose head 51g are arranged in this order. All of these components are tightened together with a tie rod 51r to provide a bipolar electrolyzer 50.

The arrangement of the bipolar electrolyzer 50 can be arbitrarily selected from either the anode side or the cathode side and is not limited to the above order.

As illustrated in FIG. 1, in the bipolar electrolyzer 50, the bipolar elements 60 are arranged between the anode terminal element 51a and the cathode terminal element 51c, and the membranes 4 are arranged between the anode terminal element 51a and a bipolar element 60, between bipolar elements 60 arranged adjacent to each other, and between a bipolar element 60 and the cathode terminal element 51c, respectively.

In the bipolar electrolyzer 50 of the present embodiment, as illustrated in FIG. 2, the membrane 4 is in contact with the anode 2a and the cathode 2c so as to form a zero-gap structure Z.

In particular in the present embodiment, in the bipolar electrolyzer 50, a portion between the partition walls 1 of two adjacent bipolar elements 60 and a portion between the partition walls 1 of each terminal element and of the adjacent the bipolar element 60 are respectively referred to as an electrolytic cell 65. Each electrolytic cell 65 includes a partition wall 1, an anode compartment 5a, and an anode 2a of one element; a membrane 4; and a cathode 2c, a cathode compartment 5c, and a partition wall 1 of another element.

The thickness 'd' of the bipolar electrolysis cell for alkaline water electrolysis of the present embodiment is preferably 10 mm to 100 mm, and more preferably 15 mm to 50 mm.

The thickness 'd' of the electrolysis cell 65 refers to the thickness of a portion between the partition walls 1 of two adjacent bipolar elements 60, and the thickness of a portion between the partition walls 1 of a bipolar element 60 and an adjacent terminal element. These refer to the distance between partition walls 1 of the two adjacent elements in the direction orthogonal to the partition walls 1, and the distance between partition walls 1 of the bipolar element 60 and the adjacent terminal element, respectivelyThe thickness 'd' is the averaged thickness if the thicknesses are not constant in the bipolar electrolyzer.

In alkaline water electrolysis, when there is a gap between a membrane 4 and an anode 2a and/or a cathode 2c, a large amount of bubbles generated by electrolysis accumulate in the gap along with the electrolyte, leading to a significant increase in electric resistance. In order to greatly reduce the bath voltage in each electrolysis cell 65, it is effective to minimize the distance between the anode 2a and the cathode 2c (hereinafter also referred to as the "inter-electrode distance") to eliminate the influence of the electrolyte and bubbles present between the anode 2a and the cathode 2c.

The zero-gap structure can maintain a state in which the anode 2a and the membrane 4 are in contact with each other, and so are the cathode 2c and the membrane 4, over the entire surfaces of the electrodes, or a state in which the distance between the electrodes is substantially the same as the thickness of the membrane 4 such that there is almost no gap between the anode 2a and the membrane 4 and between the cathode 2c and the membrane 4.

In the bipolar electrolyzer 50 according to the present embodiment, as illustrated in FIG. 2, the partition walls 1, the outer frames 3, and the membrane 4 define electrode compartments 5 through which the electrolyte passes.

A header pipe for distributing or collecting an electrolyte that is attached to the bipolar electrolyzer 50 illustrated in FIGS. 1 and 2 is typically disposed as an internal header or an external header. In the present disclosure, however, no limitation is placed on the type of header pipe and either type may be used.

The following provides a description of details of the components of the bipolar electrolytic cell for alkaline water electrolysis and of the bipolar electrolyzer according to the present embodiment.

In the following, preferred embodiments for enhancing the effect of the present disclosure are also described in detail.

- Partition wall -

Each partition wall 1 is preferably provided between a cathode 2c and an anode 2a, and between an anode 2a and a cathode current collector 2r, and/or between a cathode 2c and an anode current collector 2r.

In the present embodiment, the shape of each partition wall may be a plate-like shape having a predetermined thickness, yet is not particularly limited.

The shape of each partition wall in a plan view is not particularly limited, and it may be a rectangular shape (such as a square or a rectangle) or a circular shape (such as a circle or an ellipse), where a rectangular shape may have a rounded corner.

From the perspective of achieving uniform supply of electric power, each partition wall is preferably made of a material having high conductivity, and from the perspectives of alkali resistance and heat resistance, preferred materials include nickel, nickel alloy, mild steel, and nickel alloy plated with nickel.

- Cathode -

As the cathode in the bipolar electrolysis cell for alkaline water electrolysis of the present embodiment, in order to increase the surface area used for electrolysis and to efficiently remove gas evolved during electrolysis from the surface of the electrode, it is more preferable that the cathode is a porous body. In particular, in the case of a zero-gap electrolyzer, since it is necessary to remove the gas evolved from the back side of a surface of an electrode in contact with the membrane, it is preferable that the surface of the electrode in contact with the membrane and the opposite surface penetrate each other.

Examples of the porous body include meshes such as plain weave and twill weave, punching metal, expanded metal, metal foam, and the like.

The material of the substrate is not particularly limited, yet mild steel, stainless steel, nickel, and a nickel-based alloy are preferable because of the resistance to the operating environment.

Each cathode may have a catalyst layer, which is the cathode preferably has high hydrogen-generating ability, and for which nickel, cobalt, iron, or a platinum group element, for example, can be used. In order to realize desired activity and durability, the catalyst layer can be formed as a simple substance of a metal, a compound such as an oxide, a complex oxide or alloy composed of a plurality of metal elements, or a mixture thereof. Specifically, examples include Raney Nickel; Raney alloys made of combinations of multiple materials (e.g., nickel and aluminum, and nickel and tin); porous coating made by spraying nickel compounds or cobalt compounds as raw materials by plasma thermal spraying; alloys and composite compounds of nickel and an element selected from cobalt, iron, molybdenum, silver, and copper, for example; elementary metals and oxides of platinum group elements with high hydrogen generation abilities (e.g., platinum and ruthenium); mixtures of elementary metals or oxides of those platinum group element metals and compounds of another platinum group element (e.g., iridium or palladium) or compounds of rare earth metals (e.g., lanthanum and cerium); and carbon materials (e.g., graphene). For providing higher catalyst activity and durability, the above-listed materials may be laminated in a plurality of layers, or may be contained in the catalyst layer. An organic material, such as a polymer material, may be contained for improved durability or adhesiveness to the substrate.

Examples of the method of forming a catalyst layer on a substrate include plating, thermal spraying (e.g., plasma thermal spraying), thermolysis by applying a solution for a precursor layer on a substrate followed by heating, a method by blending a catalyst material with a binder component to be immobilized on a substrate, and vacuum film deposition (e.g., sputtering).

- Outer frame -

Although the shape of each outer frame 3 according to the present embodiment is not particularly limited as long as it can border the corresponding partition walls 1, each outer frame 3 may have an inner surface extending over the periphery of each partition wall 1 along the direction perpendicular to the plane of each partition wall 1.

The shape of the outer frame is not particularly limited, and may be appropriately determined according to the shape of the partition walls in plan view.

As a material of each outer frame, a material having conductivity is preferable, and from the perspectives of alkali resistance and heat resistance, the following materials are preferred: nickel, nickel alloy, mild steel, and nickel alloy plated with nickel.

- Membrane -

As the membrane 4 used in each bipolar electrolytic cell 65 for alkaline water electrolysis according to the present embodiment, an ion permeable membrane is used in order to isolate the generated hydrogen gas and oxygen gas while conducting ions. For this ion permeable membrane, it is possible to use an ion exchange membrane having ion exchange ability and a porous membrane capable of permeating the electrolyte. The ion permeable membrane preferably has low gas permeability, high ionic conductivity, low electronic conductivity, and high strength.

- Porous membrane -

A porous membrane has a plurality of fine through-holes, and has a structure that permits the electrolyte to pass through the membrane. Control of the porous structure such as the pore size, porosity, and hydrophilicity is very important since the electrolyte permeates into the porous membrane to develop ion conduction. On the other hand, the porous membrane is required to prevent not only the electrolyte but also the generated gas from passing therethrough, that is, to have gas barrier properties. From this perspective control of the porous structure is also important.

The porous membrane preferably contains a polymer material and hydrophilic inorganic particles, and the hydrophilic inorganic particles provide hydrophilicity to the porous membranes.

- Ion exchange membrane -

Ion exchange membranes are categorized into a cation exchange membrane that selectively allows permeation of cations and an anion exchange membrane that selectively allows permeation of anions, and either one may be used.

((Zero gap structure))

In each zero-gap electrolytic cell 65, as a means for reducing the distance between the electrodes, it is preferable to dispose a spring, which is an elastic body 2e, between an electrode 2 and the corresponding partition wall 1 to support the electrode with the spring. For instance, in a first example, a spring made of a conductive material is attached to the partition wall 1, and the electrode 2 may be attached to the spring. In a second example, a spring is attached to an electrode the ribs 6 attached to the partition wall 1, and the electrode 2 may be attached to the spring. In the case of adopting such a configuration using an elastic body, it is necessary to appropriately adjust the strength of the spring, the number of springs, the shape, and the like, as necessary, so as not to introduce non-uniformity in the pressure of the electrode against the membrane.

Further, by strengthening the rigidity of the other electrode paired with the electrode supported via the elastic body (for example, by making the rigidity of the anode stronger than the rigidity of the cathode), the other electrode is structured to have less deformation even when pressed. On the other hand, the electrode supported via the elastic body has a flexible structure capable of deforming when pressed upon the membrane such that irregularities due to fabrication accuracy of the electrolyzer, deformation of the electrode, and the like can be absorbed, and a zero-gap structure can be maintained.

The above-described zero-gap structure Z includes those formed between the anode terminal element 51a and an element, between elements, and between an element and the cathode terminal element 51c.

In each bipolar electrolytic cell 65 for alkaline water electrolysis according to the present embodiment, as illustrated in FIG. 2, it is preferable that a conductive elastic body 2e and a cathode current collector 2r are interposed between the cathode 2c and the partition 1 such that the conductive elastic body 2e is sandwiched between the cathode 2c and the cathode current collector 2r. Further, it is preferable that the cathode current collector 2r is in contact with the ribs 6 of the cathode.

As illustrated in FIG. 2, the zero-gap structure Z of each bipolar electrolytic cell 65 for alkaline water electrolysis according to the present embodiment is preferably configured such that: one bipolar element 60 in which an anode rib 6 and an anode 2a are stacked in the stated order on the anode 2a side of the partition wall 1 and another bipolar element 60 in which a cathode rib 6, a cathode current collector 2r, a conductive elastic body 2e, and a cathode 2c are stacked in the stated order on the cathode 2c side are stacked with a membrane 4 interposed therebetween; and the membrane 4 is in contact with the anode 2a and the cathode 2c.

- Current collector -

Current collectors are classified into a cathode current collector and an anode current collector.

The current collector transmits electricity to the conductive elastic body and the electrode stacked thereon, supports the loads received from them, and has a roll of allowing the gas generated from the electrodes to pass through to the partition wall successfully. The current collector is thus preferably formed as an expanded metal, a punched porous plate, or the like. In this case, the aperture ratio of the current collector is preferably within a range allowing the hydrogen gas generated from the electrode to be extracted to the partition wall side without any problems. However, if the aperture ratio is too high, the strength or the conductivity to the conductive elastic body may be lowered. If it is too small, gas escape may be deteriorated.

Nickel, nickel alloy, stainless steel, mild steel, and the like can be used as the material of the current collector from conductivity and alkali resistance perspectives, yet from the perspective of corrosion resistance, nickel, mild steel, stainless steel, and nickel alloy plated with nickel are preferred.

- Conductive elastic body -

It is essential that the conductive elastic body is provided between the current collector and the electrode and is in contact with the current collector and the electrode, and that the conductive elastic body allows the electricity to be transmitted to the electrode and does not hinder the diffusion of the gas generated from the electrode. This is because if the diffusion of gas is hindered, the electrical resistance increases and the area of the electrode used for electrolysis decreases, resulting in lower electrolysis efficiency. The most important role is to bring the membrane and the electrode into close contact with each other by evenly applying an appropriate pressure to the electrode so as not to damage the membrane.

- Electrode compartment -

In the bipolar electrolyzer 50 according to the present embodiment, as illustrated in FIG. 2, a partition wall 1, an outer frame 3, and a membrane 4 define an electrode compartment 5 that allows passage of an electrolyte. In this case, across the partition wall 1, one electrode compartment 5 on the anode side is an anode compartment 5a, and the other on the cathode side is a cathode compartment 5c.

- Rib -

In each bipolar electrolytic cell 65 for alkaline water electrolysis according to the present embodiment, it is preferable that each rib 6 is physically connected to the corresponding electrode 2. With this configuration, each rib 6 serves as a support for the corresponding electrode 2, making it easier to maintain the zero-gap structure Z. It is also preferable that each rib 6 is electrically connected to the corresponding partition wall 1.

The above example of the bipolar electrolytic cell for alkaline water electrolysis adopts a structure such that the cathode rib, the cathode current collector, the conductive elastic body, and the cathode are stacked in the stated order in the cathode compartment, and the anode rib and the anode are stacked in the stated order in the anode compartment.

Generally, a conductive metal is used as the material of the ribs. For example, nickel-plated mild steel, stainless steel, or nickel may be used. It is particularly preferable that the material of the ribs is the same as that of the partition walls. A most preferred material of the ribs is nickel.

- Gasket -

In each bipolar electrolytic cell 65 for alkaline water electrolysis according to the present embodiment, as illustrated in FIG. 2, it is preferable that a gasket 7 is sandwiched between the outer frames 3 bordering the partition walls 1 together with the membrane 4.

The gasket 7 is used for providing a seal against the electrolyte and generated gas between the bipolar element 60 and the membrane 4 and between the bipolar elements 60, and to prevent leakage of the electrolyte and generated gas to the outside of the electrolyzer and gas mixture between the bipolar compartments.

The gasket is generally configured with a quadrangular or annular shape obtained by hollowing out the electrode surface in conformity with the surface of the element (such as a bipolar element, an anode terminal element, or a cathode terminal element) contacting the frame body. A membrane can be stacked between elements by sandwiching the membrane with two such gaskets.

The material of the gasket is not particularly limited, and a known rubber material, resin material, or the like having insulation properties may be selected.

As rubber and resin materials, ethylene-propylene-diene rubber (EPDM) and fluororubber (FR) are particularly preferable from the perspective of elastic modulus and alkali resistance.

- Header -

The electrolyzer for alkaline water electrolysis preferably comprises a cathode compartment and an anode compartment for each electrolytic cell. In order to conduct the electrolysis reaction continuously in the electrolyzer, it is necessary to continuously supply an electrolyte that contains sufficient amounts of the raw materials to be consumed by electrolysis into the cathode compartment and the anode compartment of each electrolysis cell.

The electrolytic cell is connected to an electrolyte supply/discharge plumbing system, called a header, shared by a plurality of electrolytic cells. In general, the anode distribution pipe is called as an anode inlet header, the cathode distribution pipe as a cathode inlet header, the anode collection pipe as an anode outlet header, and the cathode collection pipe as a cathode outlet header. Each element is connected to the corresponding electrolyte distribution pipe and the corresponding electrolyte collection pipe through a hose or the like.

Although the material of the header is not particularly limited, it is necessary to adopt those which can withstand corrosive properties of the electrolyte to be used, operating conditions such as pressure and temperature, and so on. The material of the header may be iron, nickel, cobalt, PTFE, ETFE, PFA, polyvinyl chloride, or polyethylene.

- Internal header -

Internal header type refers to a type in which a bipolar electrolyzer and a header (a pipe for distributing or collecting an electrolyte) are integrated.

An example of internal header type has an anode inlet header and a cathode inlet header that are provided in a part of a lower portion of the outer frame at the edge of a partition wall, and similarly, an anode outlet header and a cathode outlet header in a part of an upper portion of the outer frame at the edge of the partition wall. The outer frame and the anode compartment or the cathode compartment are connected to each other at an electrolyte inlet or an electrolyte outlet through which the electrolyte passes.

- External header -

The external header type refers to a type in which a bipolar electrolyzer and a header (a pipe through which an electrolyte is distributed or collected) are independent.

In a bipolar electrolyzer of external header type, an anode inlet header and a cathode inlet header are independently provided so as to run in parallel to the electrolyzer in a direction perpendicular to the current-carrying surface of the electrolyzer. The anode inlet header and the cathode inlet header are connected to respective elements by a hose.

In the present embodiment, the characteristics of the electrolyzes described above may be used alone or in combination.

- Electrolyte -

In the bipolar electrolyzer of the present embodiment, a cathode compartment frame to which a cathode is attached and an anode compartment frame to which an anode is attached are arranged via a partition wall. That is, the anode compartment and the cathode compartment are partitioned by a partition wall. The electrolyte is supplied to the anode compartment and the cathode compartment.

As the electrolyte, those commonly used for water electrolysis can be used. Examples include an aqueous potassium hydroxide solution and an aqueous sodium hydroxide solution. Further, the concentration of the electrolyte is preferably 1 N or more and 12 N or less, and more preferably 6 N or more and 10 N or less.

(Method for producing hydrogen)

Next, a method for producing hydrogen by alkaline water electrolysis using the bipolar electrolyzer according to the present embodiment will be described.

In the present embodiment, current is applied to the above-mentioned electrolytic cell (bipolar electrolytic bath) including an anode and a cathode allowing circulation of an electrolytic solution, to perform water electrolysis, thereby producing hydrogen in the cathode. As the power supply here, for example, a variable power supply can be used. A variable power supply is a power supply whose output fluctuates in increments of several seconds to several minutes derived from a renewable energy power station, unlike a power supply with stable output, such as grid power. The method of renewable energy generation is not particularly limited, and examples thereof include solar power generation and wind power generation.

For example, in the case of electrolysis using a bipolar electrolyzer, a cationic electrolyte in the electrolyte moves from the anode compartment of an element through the membrane to the cathode compartment of the adjacent element, and an anionic electrolyte moves from the cathode compartment of an element through the membrane to the anode compartment of the adj acent element. In this way, the current during electrolysis will flow along the direction in which the elements are connected in series. That is, the current flows from the anode compartment of one element to the cathode compartment of the adjacent element via the membrane. Through the electrolysis, oxygen gas is generated in the anode compartment, and hydrogen gas in the cathode compartment.

The bipolar electrolysis cell 65 for alkaline water electrolysis of the present embodiment can be used for a bipolar electrolyzer 50 and an electrolysis device 70 for alkaline water electrolysis, for example. Examples of the electrolysis device for alkaline water electrolysis 70 include a device comprising the bipolar electrolyzer 50 of the present embodiment, a tubing pump 71 to circulate the electrolyte, a gas-liquid separation tank 72 to separate the electrolyte from hydrogen and/or from oxygen, and a water replenisher to replenish water consumed by electrolysis.

The electrolysis device for alkaline water electrolysis may further comprise other components such as a rectifier 74, an oxygen concentration meter 75, a hydrogen concentration meter 76, a flow meter 77, a pressure gauge 78, a heat exchanger 79, and a pressure control valve 80.

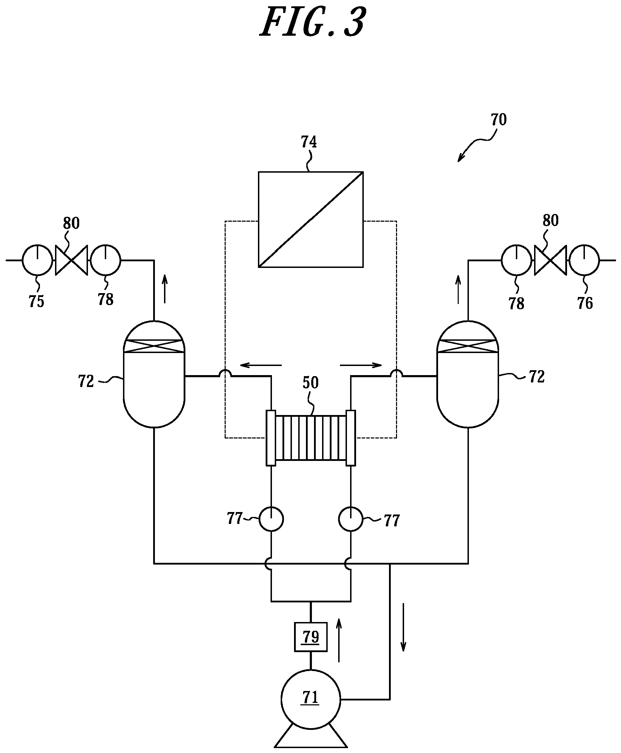

Arrows in FIG. 3 indicate directions in which the circulating liquid (electrolyte) and the gas flowed.

In the alkaline water electrolysis method using the electrolysis device for alkaline water electrolysis described above, the current density applied to the electrolysis cell is preferably from 4 kA/m$^2$ to 20 kA/m$^2$, and more preferably 6 kA/m$^2$ to 15 kA/m$^2$.

The upper limit is preferably set within the above range particularly when a variable power source is used.

A hydrogen production method of the present embodiment produces hydrogen by electrolyzing water containing an alkali in an electrolyzer.

The electrolyzer may comprise at least an anode and a cathode.

An anode may comprise a metal oxide layer containing at least a perovskite-structured metal oxide or above a part of a surface or an entire surface of a porous nickel substrate. In addition, the content of the perovskite-structured metal oxide in crystalline constituent(s) in the metal oxide layer may be 90% or more and 100% or less.

Details of the anode, the electrolyzer, and the water electrolysis method according to the present embodiment are as described above.

Although the anode, the anode for water electrolysis, the bipolar electrolysis cell, and the hydrogen production method of embodiments of the present disclosure have been descried with reference to the drawings, they are not limited to the above examples and the above-described embodiments may be modified as appropriate.

EXAMPLES

The present disclosure will be described hereinafter in more detail with reference to Examples in the following.

(Example 1)

As a porous nickel substrate, a nickel expanded metal was prepared which had an SW of 3.0 mm, an LW of 4.5 mm, a thickness of 1.2 mm, and an aperture ratio of 54%. The nickel-expanded metal was subjected to a blasting treatment, immersed in isopropyl alcohol for a degreasing treatment, subjected to an acid treatment in 6 N hydrochloric acid, and then washed with water and dried.

Next, barium acetate, strontium acetate, iron nitrate hexahydrate, and cobalt nitrate hexahydrate were weighed and blended in so that their concentrations became 0.10 mol/L, 0.10 mol/L, 0.16 mol/L, and 0.04 mol/L, respectively, to formulate a coating liquid.

A tray containing the coating liquid was placed on the bottom of an EPDM spreader roll, for making the spreader roll to be impregnated with the coating liquid. The roll was placed such that the roll and the coating liquid remained contacting at the upper portion thereof, and a PVC roller was placed to apply the coating liquid on the substrate (roll method). Before the coating liquid being dried, the substrate was quickly passed between two EPDM sponge rolls. Thereafter, drying was performed at 50°C for 10 minutes, and thereafter calcination at 400°C for 10 minutes was performed with a muffle furnace to form a metal oxide layer on the substrate surface.

This cycle including roll-coating, drying, and calcination was repeated 13 times, and thereafter calcination at 700°C for 1 hour was further performed to form a metal oxide layer, thereby obtaining an anode for water electrolysis.

(Example 2)

An anode for water electrolysis was obtained in the manner similar to the anode in Example 1 except that a coating liquid was used which was formulated from lanthanum acetate sesquihydrate, calcium acetate, and cobalt nitrate hexahydrate so that their concentrations became 0.10 mol/L, 0.10 mol/L, and 0.20 mol/L, respectively.

(Example 3)

A coating liquid was prepared so that the concentrations of lanthanum acetate sesquihydrate, nickel nitrate hexahydrate, and oxalic acid were 0.20 mol/L, 0.20 mol/L, and 1.0 mol/L, respectively, and the coating liquid was applied on the substrate with the roll method in the manner similar to Example 1. Thereafter, drying was performed at 50°C for 10 minutes, and then calcination at 400°C for 10 minutes was performed with a muffle furnace to form a metal oxide layer on the substrate surface.

This cycle including roll-coating, drying, and calcination was repeated 13 times, and the calcination at 600°C for 1 hour was further performed to form a metal oxide layer, thereby obtaining an anode for water electrolysis.

The valence of Ni in the metal oxide was 2.6.

The content of the perovskite-structured metal oxide was 97%, and a compound of a non-perovskite structure was $La_2O_3$ contained in a content of 3%.

After the continuous operation, the content of the perovskite-structured metal oxide was 92%, and compounds of non-perovskite structures were $La(OH)_3$ and $Ni(OH)_2$ contained in contents of 5% and 3%, respectively.

(Example 4)

An anode for water electrolysis was obtained in the manner similar to the anode in Example 3 except that a coating liquid was used which was formulated from lanthanum acetate sesquihydrate, nickel nitrate hexahydrate, and oxalic acid so that their concentrations became 0.20 mol/L, 0.20 mol/L, and 0.5 mol/L, respectively.

The valence of Ni in the metal oxide was 2.8.

(Example 5)

An anode for water electrolysis was obtained in the manner similar to the anode in Example 3 except that a coating liquid was used which was formulated from lanthanum acetate sesquihydrate and nickel nitrate hexahydrate so that their concentrations became 0.20 mol/L and 0.20 mol/L, respectively.

The valence of Ni in the metal oxide was 3.0.

(Example 6)

An anode for water electrolysis was obtained in the manner similar to the anode in Example 5 except that the calcination after repeating the cycle including roll-coating, drying, and calcination 13 times, was conducted at 800°C for 1 hour.

The valence of Ni in the metal oxide was 3.0.

(Example 7)

An anode for water electrolysis was obtained in the manner similar to the anode in Example 3 except that a nickel expanded metal having an SW of 3.0 mm, an LW of 4.5 mm, a thickness of 1.2 mm, and an aperture ratio 54% was provided as a porous nickel substrate without being subjected to blasting. This nickel expanded metal was immersed in isopropyl alcohol for a degreasing treatment, subjected to an acid treatment in 6 N hydrochloric acid at 60°C for 5 hours, and thereafter washed with water and dried.

The valence of Ni in the metal oxide was 3.0.

(Comparative Example 1)

An anode for water electrolysis was obtained in the manner similar to the anode in Example 1 except that a coating liquid was used which was formulated from barium nitrate, strontium nitrate, iron nitrate hexahydrate, and cobalt nitrate hexahydrate so that their concentrations became 0.10 mol/L, 0.10 mol/L, 0.16 mol/L, and 0.04 mol/L, respectively.

(Comparative Example 2)

An anode for water electrolysis was obtained in the manner similar to the anode in Example 3 except that a coating liquid was used which was formulated from lanthanum nitrate hexahydrate, nickel nitrate hexahydrate, and oxalic acid so that their concentrations became 0.20 mol/L, 0.20 mol/L, and 1.0 mol/L, respectively, and calcination was conducted at 800°C.

(Analysis on perovskite-structured metal oxide)

Confirmation as to whether a perovskite-structured metal oxide was formed in the metal oxide layer in each anode for water electrolysis fabricated and calculation of the content of the perovskite metal oxide in the crystalline constituent(s) in the metal oxide layer were made as follows.

A measurement was made using an X-ray diffractometer "RINT-2000" available from Rigaku Corporation at an excitation voltage of 40 kV and an excitation current of 200 mA with an operation axis 20/0. It was confirmed that a layer of a perovskite-structured metal oxide and other metal oxide was formed on the surface of a porous nickel substrate by a qualitative analysis of the resultant X-ray diffraction chart based on a known compound library.

In addition, after a peak from Ka ray was eliminated from the X-ray diffraction chart, followed by a baseline correction using X-ray diffraction analysis software "JADE", the respective intensities of the most intense peaks of the perovskite-structured metal oxide and other metal oxide were calculated. The proportion of the perovskite metal oxide in the crystalline constituent(s) in the metal oxide layer was calculated from the obtained peak intensities.

Evaluation results in Examples and Comparative Examples are listed in Table 1.

(Analysis on composition of perovskite-structured metal oxide)

The composition of the perovskite-structured metal oxide in the metal oxide layer in each anode for water electrolysis fabricated was calculated as follows.

A qualitative analysis of all elements and an analysis based on the semi quantitative fundamental parameter (FP) method were carried out by the X-ray diffractometer "ZSX-100e" available from Rigaku Corporation with a measurement area in 20 mm diameter to determine the composition of the perovskite-structured metal oxide.

(Crystalline size D (hkl) of perovskite-structured metal oxide)

A measurement was made using the X-ray diffractometer "RINT-2000" available from Rigaku Corporation at an excitation voltage of 40 kV and an excitation current of 200 mA with an operation axis 20/0. The half-power band width $\beta 1/2$ of the (hkl) plane, corresponding to an X-ray diffraction peak having the maximum intensity among the X-ray diffraction peaks in the resultant X-ray diffraction chart, was determined. The crystalline size D (hkl) was calculated according to the Scherrer's equation:

$$D\ (hkl) = 0.9\lambda/(\beta 1/2 \cdot \cos\theta):$$

Evaluation results in Examples and Comparative Examples are listed in Table 1.

(Measurements of thickness and porosity of nickel oxide layer)

Each anode for water electrolysis was cut into a small piece, which was enveloped in an epoxy resin. The anode was processed to give a cross-section at an accelerating voltage of 6 kV using a broad ion beam (BIB) apparatus ("E3500" available from Hitachi High-Technologies Corporation). The processed cross-section of the anode for water electrolysis was observed under a scanning electron microscope ("S-4800" from Hitachi High-Technologies Corporation). The average of measurement values at five points was defined as the thickness of the metal oxide layer. In addition, the porosity in each metal oxide layer was determined by binarizing the obtained SEM image of the catalyst layer using image analysis software ("WinROOF" available from MITANI Corporation).

Evaluation results in Examples and Comparative Examples are listed in Table 1.

(Measurement of average primary grain size of particles)

The cross-section of the anode for water electrolysis fabricated and processed in the above procedure was observed under the scanning electron microscope ("S-4800" from Hitachi High-Technologies Corporation). The SEM image of the cross-section of the catalyst layer in the anode for water electrolysis obtained as described above was binarized using the image analysis software ("WinROOF" available from MITANI Corporation). The particle grain size analysis was conducted in which an absolute maximum length of each of 10 non-coagulated metal oxide particles was measured, and the number-average of the maximum lengths was determined, to determine the average primary grain size of the metal oxide particles contained in the metal oxide layer.

Evaluation results in Examples and Comparative Examples are listed in Table 1.

(Determination of valence of Ni)

The metal oxide layer of each anode for water electrolysis fabricated was peeled off from the porous nickel substrate to obtain metal oxide powder. The metal oxide powder, after completely dried, was heated from room temperature to 700°C at a rate of 10°C/min with a thermo gravimeter/differential thermal analyzer "TG8120" available from Rigaku Corporation, and an increase in the weight was confirmed.

This increase in the weight was attributed to oxygen atoms filled in vacant oxygen sites in the metal oxide during the heating. It was assumed that the quotient obtained by dividing the increase in the weight with the number of oxygen atoms represents the number of previously-deficient oxygen atoms in the metal oxide, namely, z in Formula (1). The valence X of nickel in a perovskite compound as one represented by Formula (1) was determined from the following formula:

$$\text{Valence } X \text{ of nickel} = (3 - z) \times 2 - 3.$$

Evaluation results in Examples and Comparative Examples are listed in Table 1.

Each anode for water electrolysis after the energization of 100 hours at a current density of 6 kA/m$^2$ with a potentiostat/palvanostat was similarly evaluated, as will be described later.

(Measurement of oxygen overvoltage and evaluations of durability of anode)

The oxygen overvoltage of the anode was measured by the following procedure.

A test anode was cut out to a size of 2 cm × 2 cm, and secured to a rod covered with PTFE and made of nickel, by a screw made of nickel. A platinum mesh was used in the counter electrode, and electrolysis was conducted at a current density of 6 A/cm$^2$ in an aqueous 32% by weight sodium hydroxide solution at 80°C to measure the oxygen overvoltage (measurement of initial voltage). The oxygen overvoltage was measured by a three-electrode method using a Luggin capillary in order to eliminate the influence of the ohmic loss due to the solution resistance. The distance between the tip of the Luggin capillary and the anode was constantly fixed to 1 mm. As the measurement apparatus of the oxygen overvoltage, a potentiostat/galvanostat "1470E System" available from Solartron Analytical was used. Silver-silver chloride (Ag/AgCl) was used as the reference electrode for the three electrode method. The resistance of the electrolyte that could not be removed even by using the three electrode method was measured by the AC impedance method and the hydrogen overvoltage was corrected based on the measurements of resistance of the electrolyte. The resistance of the electrolyte and the double layer capacitance were calculated by analyzing a Cole-Cole plot where the real parts and the imaginary parts obtained by the AC impedance measurement were plotted with the frequency characteristic analyzer "1255 B" from Solartron Analytical, with equivalent circuit fitting.

The ohmic loss that could not be removed even by using the three electrode method was measured by the AC impedance method and the oxygen overvoltage was corrected based on the measurements of ohmic loss. For measurement of ohmic loss, a frequency characteristic analyzer "1255 B" from Solartron Analytical was used.

After the test anode was energized for 100 hours at a current density of 6 kA/m$^2$ with the above potentiostat/palvanostat, the oxygen overvoltage of the test anode was measured (measurement of overvoltage after a continuous operation) and the durability was evaluated.

Evaluation results in Examples and Comparative Examples are listed in Table 1.

(Analyses of count of pores with diameter of 1 μm or more and count of particles with diameter of 1 μm or more)

Each of the anodes for water electrolysis fabricated was cut into a small piece, which was enveloped in an epoxy resin. The anode was processed to give a cross-section with broadly-radiated argon ion beam at an accelerating voltage of 6 kV using the BIB apparatus ("E3500" available from Hitachi High-Technologies Corporation).

This cross section was observed under the scanning electron microscope ("S-4800" from Hitachi High-Technologies Corporation) with a magnification of × 1500 to obtain a picture of the cross-section. For each pore in the metal oxide layer observed in the cross-sectional picture, the smallest circle encompassing the pore was drawn. The distance of every two contact points was measured, and the maximum distance between the contact points was determined as the diameter of the pore.

This cross section was observed under the scanning electron microscope ("S-4800" from Hitachi High-Technologies Corporation) with a magnification of ×5000 to obtain a picture of the cross-section. For each particle without a pore of a diameter of 100 nm or more in the metal oxide layer observed in the cross-sectional picture, the smallest circle encompassing the particle was drawn. The distance of every two contact points is measured, and the maximum distance between the contact points was determined as the diameter of the particle.

Evaluation results in Examples and Comparative Examples are listed in Table 1.

(Measurement of thickness and porosity of metal oxide layer)

The cross-section prepared for the pore and particle counts in the above procedure for obtaining the cross-sectional pictures was observed under the scanning electron microscope ("S-4800" from Hitachi High-Technologies Corporation). The average of measurement values of the thickness of the metal oxide layer at five points was defined as the thickness of the metal oxide layer. In addition, the porosity in the metal oxide layer was determined by binarizing the obtained SEM image of the catalyst layer using the image analysis software ("WinROOF" available from MITANI Corporation).

Evaluation results in Examples and Comparative Examples are listed in Table 1.

| Table 1 | | | Example 1 | Example 2 | Example 3 | Example 4 | Example 5 | Example 6 | Example 7 | Comp. Ex.1 | Comp. Ex.2 |
|---|---|---|---|---|---|---|---|---|---|---|---|
| Fabrication method of anode for water electrolysis | Surface treatment for Substrate | - | Blasted (rough) | Blasted (rough) | Blasted (rough) | Blasted (rough) | Blasted (rough) | Blasted (rough) | Acid treatment (fine) | Blasted (rough) | Blasted (rough) |
| | Raw material | - | BaAc2<br><br>SrAc2<br><br>Fe(NO3)3 6H2O<br><br>Co(NO3)2 6H2O | LaAc3 1.5H2O<br><br>CaAc2<br><br>Co(NO3)2 6H2O | LaAc3 1.5H2O<br><br>Ni(NO3)2 6H2O | LaAc3 1.5H2O<br><br>Ni(NO3)2 6H2O | LaAc3 1.5H2O<br><br>Ni(NO3)2 6H2O | LaAc3 1.5H2O<br><br>Ni(NO3)2 6H2O | LaAc3 1.5H2O<br><br>Ni(NO3)2 6H2O | Ba (NO3)2<br><br>Sr (NO3)2<br><br>Fe (NO3)3 6H2O<br><br>Co (NO3)2 6H2O | La (NO2)3 6H2O<br><br>Ni(NO3)2 6H2O |
| | Calcination temperature | °C | 700 | 700 | 600 | 600 | 600 | 800 | 600 | 700 | 800 |

|  | Table 1 |  | Example 1 | Example 2 | Example 3 | Example 4 | Example 5 | Example 6 | Example 7 | Comp. Ex.1 | Comp. Ex.2 |
|---|---|---|---|---|---|---|---|---|---|---|---|
| Anode for water electrolysis | Adhesion amount | g/m$^2$ | 41 | 43 | 40 | 44 | 41 | 42 | 44 | 39 | 45 |
|  | Content of perovskite-structured metal oxide | % | 92 | 94 | 97 | 98 | 96 | 98 | 96 | 48 | 66 |
|  | Thickness of nickel oxide laye | mm | 0.8 | 0.8 | 0.7 | 0.7 | 0.7 | 1.2 | 0.8 | 0.9 | 1.2 |
|  | double layer capacitance | F/cm$^2$ | 0.28 | 0.32 | 0.26 | 0.31 | 0.32 | 0.36 | 0.27 | 0.28 | 0.33 |
|  | Average primary grain size of particles | $\mu$m | 121 | 104 | 75 | 68 | 88 | 96 | 61 | 286 | 362 |
|  | Crystalline size D of perovskite-structured metal | nm | 19 | 23 | 8 | 8 | 10 | 10 | 11 | 21 | 29 |
|  | Porosity of metal oxide layer | % | 28 | 25 | 23 | 24 | 27 | 27 | 29 | 31 | 28 |
|  | valence of nickel | - | - | - | 2.6 | 2.8 | 3.0 | 3.0 | 3.0 | - | 3.0 |
|  | Count of pores with diameter of 1mm | #/100 $\mu$m$^2$ | 3 | 2 | 4 | 3 | 4 | 3 | 2 | 12 | 15 |
|  | Count of particles withwith diameter of 1mm | #/ 100$\mu$m$^2$ | 2 | 2 | 1 | 0 | 1 | 2 | 1 | 14 | 11 |
|  | Thickness of metal oxide layer | $\mu$m | 5 | 5 | 4 | 5 | 4 | 4 | 4 | 4 | 5 |
|  | Content of perovskite-structured metal oxide (after continous operation) | % | 87 | 89 | 92 | 94 | 91 | 92 | 90 | 40 | 51 |
| Evaluations | Initial overvoltage | mV | 212 | 231 | 211 | 236 | 258 | 278 | 205 | 296 | 312 |
|  | Overvoltage after continous operation (*) | mV | 249 | 248 | 209 | 212 | 211 | 246 | 208 | 289 | 294 |
| (*) 6kA/m2, 100 hours in total AC=CH3COO | | | | | | | | | | | |

As listed in Table 1, the initial overvoltages of Examples were lower than 280 mV, and sufficiently low overvoltages were observed. In contrast, the oxygen overvoltages of Comparative Examples were 280 mV or more.

The oxygen overvoltages of Examples 1, 2, 3, 4, and 7 were 240 mV or less, which were particularly low.

Overvoltages after 100-hour electrolysis were equivalent to or even lower than the initial oxygen overvoltages in Examples 3-7, and a stable overvoltage behavior was observed and high durability was also confirmed.

(Example 8)

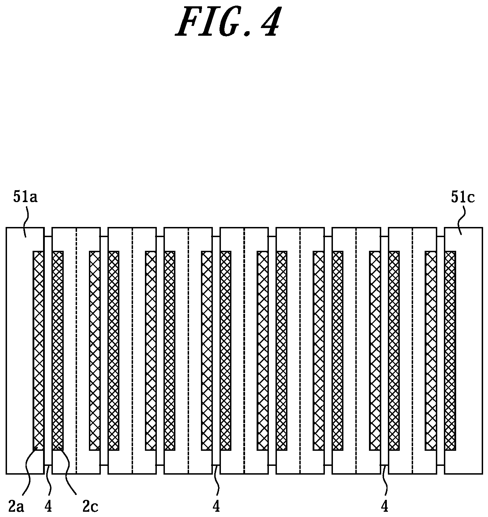

An electrolytic cell for alkaline water electrolysis and a bipolar electrolyzer were prepared as follows (see FIG. 4).

- Anode -

The anode was fabricated in the manner similar to the anode in Example 1.

- Cathode -

A plain weave mesh-type substrate of nickel thin wires of a diameter of 0.15 mm woven into #40 mesh having platinum held thereon was used as a conductive substrate.

- Partition wall and outer frame -

As a bipolar element, one having a partition wall separating an anode from a cathode and an outer frame surrounding the partition wall was used. Those members in contact with the electrolyte, such as the partition wall and the frame of the bipolar element, were all made of nickel.

- Conductive elastic body -

As a conductive elastic body, a woven metal fabric of nickel wires having a wire diameter of 0.15 mm corrugated so as to have a corrugation height of 5 mm, was used.

- Membrane -

Zirconium oxide (Product name "EP zirconium oxide" available from Daiichi Kigenso Kagaku Kogyo Co., Ltd.), N-methyl-2-pyrrolidone (available from Wako Pure Chemical Industries, Ltd), polysulfone ("Udel"® from Solvay Advanced Polymers, Udel is a registered trademark in Japan, other countries, or both), and polyvinylpyrrolidone (available from Wako Pure Chemical Industries, Ltd., weight-average molecular weight (Mw): 900,000), were used to obtain a coating liquid having the following composition:

polysulfone: 15 parts by mass
polyvinylpyrrolidone: 6 parts by mass
N-methyl-2-pyrrolidone: 70 parts by mass
zirconium oxide: 45 parts by mass

The coating liquid was applied to both surfaces of a polyphenylene sulfide mesh (from Clever Co., Ltd., film thickness: 280 $\mu$m, mesh opening: 358 $\mu$m, and fiber diameter: 150 $\mu$m) as a substrate. Immediately after the coating, the substrate coated with the coating liquid was exposed to vapor, and was then immersed in a coagulation bath to form a coating film on the surface of the substrate. Thereafter, the coating film was thoroughly rinsed with pure water to obtain a porous membrane.

- Gasket -

The gaskets used had a quadrangular shape with a thickness of 4.0 mm, a width of 18 mm, and an inner size of 504 mm square, having an opening having the same size as the electrode compartment in plan view, and having a slit structure for holding by receiving the membrane in.

- Zero-gap type bipolar element -

The zero-gap cell unit 60 of external header type had a rectangular shape of 540 mm $\times$ 620 mm, and the area of the current-carrying surface of the anode 2a and the cathode 2c was 500 mm × 500 mm. On the cathode side, the zero-gap bipolar element 60 comprises: a cathode 2c, a conductive elastic body 2e, and a cathode current collector 2r that are stacked on top of one another and connected to a partition wall 1 via a cathode rib 6; and a cathode compartment 5c in which the electrolyte flows. On the anode side, the zero-gap bipolar element 60 comprises: an anode 2a that is connected to a partition wall 1 via an anode rib 6; and an anode compartment 5a in which the electrolyte flows (FIG. 2).

The depth of the anode compartment 5a (the anode compartment depth, in FIG. 2, the distance between the partition wall and the anode) was 25 mm, the depth of the cathode compartment 5c (the cathode compartment depth, in FIG. 2, the distance between the partition wall and the cathode current collector) was 25 mm, and the material was nickel. The partition wall 1 was made of nickel and obtained by welding the anode rib 6 made of nickel having a height of 25 mm and a thickness of 1.5 mm and the cathode rib 6 made of nickel having a height of 25 mm and a thickness of 1.5 mm. The thickness of the partition wall 1 was 2 mm.

As the cathode current collector 2r, a nickel-expanded metal substrate subjected to blasting in advance was used. The thickness of the substrate was 1 mm and the aperture ratio was 54%. The conductive elastic body 2e was fixed by spot-welding on the cathode current collector 2r. By stacking these zero-gap bipolar elements on top of one another via the gasket holding the membrane, it is possible to form a zero-gap structure Z in which the anode 2a and the cathode 2c are pressed against the membrane 4.

(Comparative Example 3)

A zero-gap bipolar element was produced in the same manner as in Example 8 except that the anode prepared in the same manner as in Comparative Example 1 was used.

Using the above electrolytic device, positive current was continuously applied for 100 hours so as to obtain a current density of 6 kA/m² to perform water electrolysis. Pairs voltages were monitored for each cell of Example 8 and Comparative Example 3, and voltage transitions were recorded. The respective voltages of three cells in Example 8 and Comparative Example 3 were averaged, which are compared in Table 2.

The averaged initial overvoltage of the three cells was 1.73 V and the averaged overvoltage after 24 hours was also low with 1.77 V in Example 8. In contrast, the averaged initial overvoltage of the three cells was high with 1.81 V and the averaged overvoltage after 24 hours was also high with 1.82 V in Comparative Example 3. Accordingly, it can be concluded that the anodes in Example 8 had lower overvoltage and higher durability than those of the anodes in Comparative Example 3, thereby maintaining lower cell voltages even after the long-term operations.

(Example 9)

As a porous nickel substrate, a nickel expanded metal was prepared which had an SW of 3.0 mm, an LW of 4.5 mm, a thickness of 1.2 mm, and an aperture ratio of 54%. The nickel-expanded metal was subjected to a blasting treatment, immersed in isopropyl alcohol for a degreasing treatment, subjected to an acid treatment in 6 N hydrochloric acid, and then washed with water and dried.

Next, barium acetate, strontium acetate, iron nitrate hexahydrate, and cobalt nitrate hexahydrate were weighed and blended in so that their concentrations became 0.10 mol/L, 0.10 mol/L, 0.16 mol/L, and 0.04 mol/L, respectively, to formulate a coating liquid.

A tray containing the coating liquid was placed on the bottom of an EPDM spreader roll, for making the spreader roll to be impregnated with the coating liquid. The roll was placed such that the roll and the coating liquid remained contacting at the upper portion thereof, and a PVC roller was placed to apply the coating liquid on the substrate (roll method). Before the coating liquid being dried, the substrate was quickly passed between two EPDM sponge rolls. Thereafter, drying was performed at 50°C for 10 minutes, and thereafter calcination at 400°C for 10 minutes was performed with a muffle furnace to form a metal oxide layer on the substrate surface.

This cycle including roll-coating, drying, and calcination was repeated 40 times, and thereafter calcination at 700°C for 1 hour was further performed to form a metal oxide layer, thereby obtaining an anode for water electrolysis.

(Example 10)

An anode for water electrolysis was obtained in the manner similar to the anode in Example 9 except that a coating liquid was used which was formulated from lanthanum acetate sesquihydrate, calcium acetate, and cobalt nitrate hexahydrate so that their concentrations became 0.10 mol/L, 0.10 mol/L, and 0.20 mol/L, respectively.

(Example 11)

A coating liquid was prepared so that the concentrations of lanthanum acetate sesquihydrate and nickel nitrate hexahydrate were 0.20 mol/L and 0.20 mol/L, respectively, and the coating liquid was applied on the substrate with the roll method in the manner similar to Example 1. Thereafter, drying was performed at 50°C for 10 minutes, and thereafter calcination at 400°C for 10 minutes was performed with a muffle furnace to form a metal oxide layer on the substrate surface.

This cycle including roll-coating, drying, and calcination was repeated 40 times, and the calcination at 600°C for 1 hour was further performed to form a metal oxide layer, thereby obtaining an anode for water electrolysis.

(Comparative Example 4)

An anode for water electrolysis was obtained in the manner similar to the anode in Example 10 except that a coating liquid was used which was formulated from lanthanum nitrate sesquihydrate, calcium nitrate , and cobalt nitrate hexahydrate so that their concentrations became 0.10 mol/L, 0.10 mol/L, and 0.20 mol/L, respectively, and the cycle including roll-coating, drying and calcination was repeated 15 times.

(Comparative Example 5)

An anode for water electrolysis was obtained in the manner similar to the anode in Example 9 except that a coating liquid was used which was formulated from lanthanum nitrate hexahydrate and nickel nitrate hexahydrate so that their concentrations became 0.20 mol/L and 0.20 mol/L, respectively, and the cycle including roll-coating, drying and calcination was repeated 13 times.

(Example 12) (not according to the invention)

A coating liquid was prepared so that the concentrations of lanthanum acetate sesquihydrate and nickel nitrate hexahydrate were 0.20 mol/L and 0.20 mol/L, respectively, and the coating liquid was applied on the substrate with the roll method in the manner similar to Example 9. Thereafter, drying was performed at 50°C for 10 minutes, and thereafter calcination at 400°C for 10 minutes was performed with a muffle furnace to form a metal oxide layer on the substrate surface.
This cycle including roll-coating, drying, and calcination was repeated 9 times, and the calcination at 600°C for 1 hour was further performed to form a metal oxide layer, thereby obtaining an anode for water electrolysis.

(Example 13) (not according to the invention)

An anode for water electrolysis was obtained in the manner similar to the anode in Example 12 except that the cycle including roll-coating, drying and calcination was repeated 75 times.

(Example 14)

An anode for water electrolysis was obtained in the manner similar to the anode in Example 9 except that a coating liquid was used which was formulated from lanthanum acetate sesquihydrate, nickel nitrate hexahydrate, and manganese nitrate hexahydrate so that their concentrations became 0.20 mol/L, 0.08 mol/L, and 0.12 mol/L, respectively.

(Example 15)

An anode for water electrolysis was obtained in the manner similar to the anode in Example 9 except that a coating liquid was used which was formulated from lanthanum acetate sesquihydrate, nickel nitrate hexahydrate, and niobium chloride so that their concentrations became 0.20 mol/L, 0.16 mol/L, and 0.04 mol/L, respectively.
The content of the perovskite-structured metal oxide was 97%, and compounds of non-perovskite structures were $La_2O_3$ and $Nb_2O_5$ contained in contents of 2% and 1%, respectively.
After the continuous operation, the content of the perovskite-structured metal oxide was 95%, and compounds of non-perovskite structures were $La(OH)_3$ and $Ni(OH)_2$ contained in contents of 3% and 2%, respectively.

(Example 16)

An anode for water electrolysis was obtained in the manner similar to the anode in Example 9 except that a coating liquid was used which was formulated from lanthanum acetate sesquihydrate, nickel nitrate hexahydrate, and yttrium nitrate hexahydrate so that their concentrations became 0.20 mol/L, 0.16 mol/L, and 0.04 mol/L, respectively.

(Example 17)

An anode for water electrolysis was obtained in the manner similar to the anode in Example 9 except that a coating liquid was used which was formulated from lanthanum nitrate hexahydrate, nickel nitrate hexahydrate, oxalic acid sodium niobate n-hydrate, and glycine so that their concentrations became 0.20 mol/L, 0.16 mol/L, 0.04 mol/L, and 0.36 mol/L, respectively.

(Example 18)

An anode for water electrolysis was obtained in the manner similar to the anode in Example 9 except that a coating liquid was used which was formulated from lanthanum acetate sesquihydrate, nickel nitrate hexahydrate, and antimonyl tartrate so that their concentrations became 0.20 mol/L, 0.16 mol/L, and 0.04 mol/L, respectively.

(Example 19) (not according to the invention)

An anode for water electrolysis was obtained in the manner similar to the anode in Example 9 except that a coating liquid was used which was formulated from lanthanum acetate sesquihydrate, nickel nitrate hexahydrate, and titanium oxide sol so that their concentrations became 0.20 mol/L, 0.10 mol/L, and 0.10 mol/L, respectively.

The elemental composition of the perovskite-structured metal oxide was $LaNi_{0.95}Ti_{0.05}O_n$ (n is the number of oxygen atoms that satisfies the valency conditions for other elements included, and ranges from 3.0 to 3.3).

The content of the perovskite-structured metal oxide was 96%, and compounds of non-perovskite structures were $La_2O_3$ and $TiO_2$ contained in contents of 3% and 1%, respectively.

After the continuous operation, the content of the perovskite-structured metal oxide was 90%, and compounds of non-perovskite structures were $La(OH)_3$ and $Ni(OH)_2$ contained in contents of 6% and 4%, respectively.

(Example 20)

An anode for water electrolysis was obtained in the manner similar to the anode in Example 9 except that a coating liquid was used which was formulated from lanthanum acetate sesquihydrate, nickel nitrate hexahydrate, copper nitrate hexahydrate, and glycine so that their concentrations became 0.20 mol/L, 0.12 mol/L, 0.08 mol/L, and 0.20 mol/L, respectively.

(Example 21)

An anode for water electrolysis was obtained in the manner similar to the anode in Example 9 except that a coating liquid was used which was formulated from lanthanum acetate sesquihydrate, nickel nitrate hexahydrate, and chromium nitrate hexahydrate so that their concentrations became 0.20 mol/L, 0.12 mol/L, and 0.08 mol/L, respectively.

(Example 22) (not according to the invention)

An anode for water electrolysis was obtained in the manner similar to the anode in Example 9 except that a coating liquid was used which was formulated from lanthanum acetate sesquihydrate, nickel nitrate hexahydrate, and chromium nitrate hexahydrate so that their concentrations became 0.20 mol/L, 0.16 mol/L, and 0.04 mol/L, respectively.

(Example 23)

An anode for water electrolysis was obtained in the manner similar to the anode in Example 9 except that a coating liquid was used which was formulated from lanthanum acetate sesquihydrate, nickel nitrate hexahydrate, and iron nitrate hexahydrate so that their concentrations became 0.20 mol/L, 0.16 mol/L, and 0.04 mol/L, respectively.

The elemental composition of the perovskite-structured metal oxide was $LaNi_{0.83}Fe_{0.17}O_n$ (n is the number of oxygen atoms that satisfies the valency conditions for other elements included, and ranges from 2.7 to 2.9).

(Example 24)

An anode for water electrolysis was obtained in the manner similar to the anode in Example 9 except that a coating liquid was used which was formulated from lanthanum acetate sesquihydrate, nickel nitrate hexahydrate, iron nitrate hexahydrate, and glycine so that their concentrations became 0.20 mol/L, 0.16 mol/L, 0.04 mol/L, and 0.20 mol/L, respectively.

(Example 25)

An anode for water electrolysis was obtained in the manner similar to the anode in Example 9 except that a coating liquid was used which was formulated from lanthanum acetate sesquihydrate, nickel nitrate hexahydrate, and zirconium oxynitrate so that their concentrations became 0.20 mol/L, 0.18 mol/L, and 0.02 mol/L, respectively.

(Example 26)

An anode for water electrolysis was obtained in the manner similar to the anode in Example 9 except that a coating liquid was used which was formulated from lanthanum acetate sesquihydrate, nickel nitrate hexahydrate, and zirconium oxynitrate so that their concentrations became 0.20 mol/L, 0.12 mol/L, and 0.08 mol/L, respectively.
The content of the perovskite-structured metal oxide was 94%, and compounds of non-perovskite structures were $La_2O_3$ and $ZrO_2$ contained in contents of 3% and 3%, respectively.
After the continuous operation, the content of the perovskite-structured metal oxide was 89%, and compounds of non-perovskite structures were $La(OH)_3$ and $Ni(OH)_2$ contained in contents of 5% and 3%, respectively.

(Example 27) (not according to the invention)

An anode for water electrolysis was obtained in the manner similar to the anode in Example 9 except that a coating liquid was used which was formulated from lanthanum acetate sesquihydrate, calcium acetate monohydrate, nickel nitrate hexahydrate, and iron nitrate hexahydrate so that their concentrations became 0.18 mol/L, 0.02 mol/L, 0.18 mol/L, and 0.02 mol/L, respectively.

(Example 28)

An anode for water electrolysis was obtained in the manner similar to the anode in Example 9 except that a coating liquid was used which was formulated from lanthanum acetate sesquihydrate, barium acetate, nickel nitrate hexahydrate, and copper nitrate hexahydrate so that their concentrations became 0.12 mol/L, 0.08 mol/L, and 0.16 mol/L, 0.04 mol/L, respectively.

(Example 29) (not according to the invention)

An anode for water electrolysis was obtained in the manner similar to the anode in Example 9 except that a coating liquid was used which was formulated from lanthanum acetate sesquihydrate, strontium acetate, nickel nitrate hexahydrate, and zinc nitrate hexahydrate so that their concentrations became 0.16 mol/L, 0.04 mol/L, 0.16 mol/L, and 0.04 mol/L, respectively.

(Example 30)

An anode for water electrolysis was obtained in the manner similar to the anode in Example 9 except that a coating liquid was used which was formulated from lanthanum acetate sesquihydrate, cerium acetate hydrate, nickel nitrate hexahydrate, tantalum chloride, and glycine so that their concentrations became 0.16 mol/L, 0.04 mol/L, 0.16 mol/L, 0.04 mol/L, and 0.20 mol/L, respectively.

(Example 31) (not according to the invention)

An anode for water electrolysis was obtained in the manner similar to the anode in Example 9 except that a coating liquid was used which was formulated from lanthanum acetate sesquihydrate, neodymium nitrate hexahydrate, nickel nitrate hexahydrate, and yttrium nitrate hexahydrate so that their concentrations became 0.16 mol/L, 0.04 mol/L, 0.16 mol/L, and 0.04 mol/L, respectively.

(Example 32)

An anode for water electrolysis was obtained in the manner similar to the anode in Example 9 except that a coating liquid was used which was formulated from lanthanum acetate sesquihydrate, magnesium nitrate hexahydrate, nickel nitrate hexahydrate, and titanium oxide sol so that their concentrations became 0.12 mol/L, 0.08 mol/L, 0.16 mol/L, and 0.04 mol/L, respectively.
Evaluation results in Examples and Comparative Examples are listed in Table 2.

| Table 2-1 | | | Example 9 | Example 10 | Example 11 | Comp. Ex.4 | Comp. Ex.5 | Example 12 | Example 13 | Example 14 | Example 15 |
|---|---|---|---|---|---|---|---|---|---|---|---|
| Fabrication method of anode for water electrolysis | Surface treatment for Substrate | - | Blasted (rough) | Blasted (rough) | Blasted (rough) | Blasted (rough) | Blasted (rough) | Blasted (rough) | Blasted (rough) | Blasted (rough) | Blasted (rough) |
| | Raw material | - | BaAc2<br><br>SrAc2<br><br>Fe(NO3)3 6H2O<br><br>Co(NO3)2 6H2O | LaAc3 1.5H2O<br><br>CaAc2<br><br>Co(NO3)2 6H2O | LaAc3 1.5H2O<br><br>Ni(NO3)2 6H2O | La (NO2)3 6H2O<br><br>Ca (NO2)2<br><br>Co (NO3)2 6H2O | La (NO2)3 6H2O Ni(NO3)2 6H2O | LaAc3 1.5H2O Ni(NO3)2 6H2O | LaAc3 1.5H2O Ni(NO3)2 6H2O | LaAc3 1.5H2O<br><br>Ni(NO3)2 6H2O<br><br>Mn(NO2)2 6H2O | LaAc3 1.5H2O<br><br>Ni(NO3)2 6H2O<br><br>NbC15 |
| | Calcination temperature | °C | 700 | 700 | 600 | 700 | 700 | 600 | 600 | 700 | 700 |

(continued)

| Table 2-1 | | | Example 9 | Example 10 | Example 11 | Comp. Ex.4 | Comp. Ex.5 | Example 12 | Example 13 | Example 14 | Example 15 |
|---|---|---|---|---|---|---|---|---|---|---|---|
| Anode for water electrolysis | Adhesion amount | g/m² | 148 | 154 | 156 | 52 | 39 | 28 | 303 | 140 | 138 |
| | Content of perovskite-structured metal oxide | % | 93 | 95 | 97 | 52 | 61 | 96 | 94 | 97 | 97 |
| | Thickness of nickel oxide laye | mm | 0.8 | 0.8 | 0.6 | 0.7 | 0.8 | 0.7 | 0.6 | 0.8 | 0.7 |
| | double layer capacitance | F/cm² | 13 | 1.4 | 13 | 0.24 | 0.28 | 0.13 | 2.4 | 0.15 | 0.6 |
| | Average primary grain size of particles | µm | 117 | 109 | 81 | 312 | 291 | 66 | 72 | 75 | 75 |
| | Crystalline size D of perovskite-structured metal | nm | 21 | 18 | 9 | 23 | 31 | 8 | 9 | 18 | 8 |
| | Porosity of metal oxide layer | % | 23 | 28 | 28 | 28 | 29 | 26 | 25 | 23 | 23 |
| | valence of nickel | - | - | - | 3.0 | - | 3.0 | 3.0 | 3.0 | 2.5 | 2.5 |
| | Count of pores with diameter of 1mm | #/100 µm² | 4 | 2 | 4 | 9 | 10 | 3 | 4 | 5 | 3 |
| | Count of particles withwith diameter of 1mm | #/100µm² | 1 | 1 | 0 | 14 | 16 | 1 | 3 | 5 | 3 |
| | Thickness of metal oxide layer | µm | 11 | 12 | 13 | 6 | 5 | 4 | 54 | 4 | 12 |
| | Content of perovskite-structured metal oxide (after continous operation) | % | 86 | 88 | 92 | 41 | 48 | 90 | 89 | 92 | 95 |

| Table 2-1 | | | Example 9 | Example 10 | Example 11 | Comp. Ex.4 | Comp. Ex.5 | Example 12 | Example 13 | Example 14 | Example 15 |
|---|---|---|---|---|---|---|---|---|---|---|---|
| Evaluations | Initial overvoltage | mV | 196 | 212 | 218 | 304 | 296 | 273 | 265 | 231 | 227 |
| | Overvoltage after continous operation (*) | mV | 242 | 239 | 221 | 301 | 304 | 295 | 298 | 230 | 233 |
| (*) 6kA/m2, 100 hours in total AC=CH3COO | | | | | | | | | | | |

EP 3 587 622 B1

Table 2-2

| | | | Example 16 | Example 17 | Example 18 | Example 19 | Example 20 | Example 21 | Example 22 | Example 23 | Example 24 |
|---|---|---|---|---|---|---|---|---|---|---|---|
| Fabrication method of anode for water electrolysis | Surface treatment for Substrate | - | Blasted (rough) | Blasted (rough) | Blasted (rough) | Blasted (rough) | Blasted (rough) | Blasted (rough) | Blasted (rough) | Blasted (rough) | Blasted (rough) |
| | Raw material | - | LaAc3 1.5H2O Ni(NO3)2 6H2O Y(NO3)3 6H2O | La(NO2)3 6H2O Ni(NO3)2 6H2O C4H4NNbO9 xH2O | LaAc3 1.5H2O Ni(NO3)2 6H2O antimonyl tartrate | LaAc3 1.5H2O Ni(NO3)2 6H2O TiO2 sol | LaAc3 1.5H2O Ni(NO3)2 6H2O Cu(NO3)2 6H2O | LaAc3 1.5H2O Ni(NO3)2 6H2O Cr(NO3)2 6H2O | LaAc3 1.5H2O Ni(NO3)2 6H2O Cr(NO3)2 6H2O | LaAc3 1.5H2O Ni(NO3)2 6H2O Fe(NO3)3 6H2O | LaAc3 1.5H2O Ni(NO3)2 6H2O Fe(NO3)3 6H2O |
| | Calcination temperature | °C | 700 | 700 | 700 | 700 | 700 | 700 | 700 | 700 | 700 |

| Table 2-2 | | | Example 16 | Example 17 | Example 18 | Example 19 | Example 20 | Example 21 | Example 22 | Example 23 | Example 24 |
|---|---|---|---|---|---|---|---|---|---|---|---|
| Anode for water electrolysis | Adhesion amount | $g/m^2$ | 141 | 145 | 142 | 140 | 138 | 145 | 142 | 145 | 145 |
| | Content of perovskite-structured metal oxide | % | 95 | 97 | 97 | 96 | 94 | 97 | 96 | 94 | 98 |
| | Thickness of nickel oxide laye | mm | 0.8 | 0.7 | 0.7 | 0.7 | 0.8 | 0.6 | 0.7 | 0.8 | 1.4 |
| | double layer capacitance | $F/cm^2$ | 1.4 | 0.15 | 0.6 | 0.13 | 0.32 | 1.3 | 0.13 | 0.32 | 0.36 |
| | Average primary grain size of particles | $\mu$m | 109 | 75 | 75 | 66 | 101 | 81 | 66 | 104 | 96 |
| | Crystalline size D of perovskite-structured metal | nm | 18 | 8 | 8 | 8 | 26 | 9 | 8 | 23 | 10 |
| | Porosity of metal oxide layer | % | 28 | 23 | 23 | 26 | 25 | 28 | 26 | 25 | 27 |
| | valence of nickel | - | - | 2.5 | 2.6 | 3.0 | 2.8 | 2.9 | 3.0 | 2.6 | 3.0 |
| | Count of pores with diameter of 1mm | $\#/100\mu m^2$ | 2 | 3 | 3 | 3 | 2 | 4 | 3 | 2 | 3 |
| | Count of particles withwith diameter of 1mm | $\#/100\mu m^2$ | 1 | 1 | 1 | 1 | 2 | 0 | 1 | 2 | 3 |
| | Thickness of metal oxide layer | $\mu$m | 12 | 14 | 12 | 4 | 5 | 13 | 4 | 5 | 4 |
| | Content of perovskite-structured metal oxide (after continous operation) | % | 88 | 96 | 92 | 90 | 89 | 93 | 90 | 89 | 93 |

(continued)

| Table 2-2 | | | Example 16 | Example 17 | Example 18 | Example 19 | Example 20 | Example 21 | Example 22 | Example 23 | Example 24 |
|---|---|---|---|---|---|---|---|---|---|---|---|
| Evaluations | Initial overvoltage | mV | 216 | 232 | 238 | 271 | 231 | 215 | 266 | 231 | 280 |
| | Overvoltage after continous operation (*) | mV | 242 | 238 | 243 | 292 | 248 | 224 | 285 | 248 | 246 |
| (*) 6kA/m2, 100 hours in total AC=CH3COO | | | | | | | | | | | |

Examples 19 and 22 are not according to the invention.

| Table 2-3 | | | Example 25 | Example 26 | Example 27 | Example 28 | Example 29 | Example 30 | Example 31 | Example 32 |
|---|---|---|---|---|---|---|---|---|---|---|
| Fabrication method of anode for water electrolysis | Surface treatment for Substrate | - | Blasted (rough) | Blasted (rough) | Blasted (rough) | Blasted (rough) | Blasted (rough) | Blasted (rough) | Blasted (rough) | Blasted (rough) |
| | Raw material | - | LaAc3 1.5H2O<br><br>Ni(NO3)2 6H2O<br><br>ZrO (NO3)2 2Σ120 | LaAc3 1.5H2O Ni(NO3)2 6H2O ZrO (NO3)2 2H2O | LaAc3 1.5H2O CaAc2 1H2O Ni(NO3)2 6H2O Fe(NO3)3 6H2O | LaAc3 1.5H2O BaAc2 Ni(NO3)2 6H2O Cu(NO3)2 6H2O | LaAc3 1.5H2O SrAc2 Ni(NO3)2 6H2O Zn(NO3)2 6H2O | LaAc3 1.5H2O CeAc3 H2O Ni(NO3)2 6H2O TaCl5 | LaAc3 1.5H2O Nd(NO3)3 6H2O Ni(NO3)2 6H2O Y(NO3)3 6H2O | LaAc3 1.5H2O Mg(NO3)2 6H2O Ni(NO3)2 6H2O TiO2 sol |
| | Calcination temperature | °C | 700 | 700 | 700 | 700 | 700 | 700 | 700 | 700 |

(continued)

| Table 2-3 | | | Example 25 | Example 26 | Example 27 | Example 28 | Example 29 | Example 30 | Example 31 | Example 32 |
|---|---|---|---|---|---|---|---|---|---|---|
| Anode for water electrolysis | Adhesion amount | g/m$^2$ | 142 | 142 | 140 | 150 | 140 | 140 | 146 | 140 |
| | Content of perovskite-structured metal oxide | % | 92 | 94 | 93 | 96 | 94 | 97 | 92 | 97 |
| | Thickness of nickel oxide laye | mm | 0.8 | 0.8 | 0.6 | 0.8 | 0.6 | 0.8 | 0.6 | 0.8 |
| | double layer capacitance | F/cm$^2$ | 0.28 | 0.32 | 2.4 | 0.27 | 2.4 | 0.15 | 2.4 | 0.15 |
| | Average primary grain size of particles | $\mu$m | 121 | 104 | 72 | 61 | 72 | 75 | 72 | 75 |
| | Crystalline size D of perovskite-structured metal | nm | 19 | 23 | 9 | 11 | 9 | 18 | 9 | 18 |
| | Porosity of metal oxide layer | % | 28 | 25 | 25 | 29 | 25 | 23 | 25 | 23 |
| | valence of nickel | - | 2.8 | 2.8 | 3.0 | 3 | 3.0 | 2.5 | 3.0 | 2.5 |
| | Count of pores with diameter of 1mm | #/ 100$\mu$m$^2$ | 3 | 2 | 4 | 2 | 4 | 5 | 4 | 5 |
| | Count of particles withwith diameter of 1mm | #/ 100$\mu$m$^2$ | 2 | 2 | 3 | 1 | 3 | 5 | 3 | 5 |
| | Thickness of metal oxide layer | $\mu$m | 5 | 5 | 54 | 4 | 54 | 4 | 54 | 4 |
| | Content of perovskite-structured metal oxide (after continous operation) | % | 87 | 89 | 88 | 90 | 89 | 92 | 89 | 92 |
| Evaluations | Initial overvoltage | mV | 212 | 231 | 265 | 205 | 265 | 231 | 265 | 231 |
| | Overvoltage after continous operation (*) | mV | 249 | 248 | 298 | 208 | 298 | 230 | 298 | 230 |
| (*) 6kA/m2, 100 hours in total AC=(C2H3O2) | | | | | | | | | | |

EP 3 587 622 B1

Examples 27, 29 and 31 are not according to the invention.

INDUSTRIAL APPLICABILITY

The anode of the present disclosure has a low oxygen-generating potential and exhibits a high energy exchange efficiency in electrolysis of water. Accordingly, the anode can be utilized as an anode for water electrolysis. In particular, the anode can be suitably utilized as an anode for water electrolysis utilizing a variable power supply of electricity generation or the like by natural energy unstably supplied, such as wind power or solar power.

**Claims**

1. An anode (2a), comprising:

   a porous nickel substrate; and
   a metal oxide layer containing at least a perovskite-structured metal oxide on or above a part of a surface or the entire surface of the porous nickel substrate,
   wherein the content of the perovskite-structured metal oxide in the crystalline constituent in the metal oxide layer is 90% or more and 100% or less, and

   **characterized in that** the anode has a double layer capacitance, determined as described in the description, of 0.15 F/cm$^2$ or more and 1.5 F/cm$^2$ or less.

2. The anode (2a) according to claim 1, further comprising a nickel oxide layer between the porous nickel substrate and the metal oxide layer, the nickel oxide layer having a thickness of 0.1 $\mu$m or more and 1.0 $\mu$m or less.

3. The anode (2a) according to claim 1 or 2, wherein the porous nickel substrate has an aperture ratio of 20% or more and 80% or less, and/or wherein the porous nickel substrate has a thickness of 0.2 mm or more and 2.0 mm or less.

4. The anode (2a) according to any one of claims 1 to 3, wherein the porous nickel substrate is an expanded metal, preferably wherein the expanded metal has a dimension comprising a short way of mesh (SW) of 2 mm or more and 5 mm or less, and an long way of mesh (LW) of 3 mm or more and 10 mm or less.

5. The anode (2a) according to any one of claims 1 to 4, wherein the count of pores having a diameter of 1 $\mu$m or more in the metal oxide layer per 100 $\mu$m$^2$ thereof is 5 or less, or
   wherein the count of particles having a diameter of 1 $\mu$m or more in the metal oxide layer per 100 $\mu$m$^2$ thereof is 5 or less.

6. The anode (2a) according to any one of claims 1 to 4, wherein

   the count of pores having a diameter of 1 $\mu$m or more in the metal oxide layer per 100 $\mu$m$^2$ thereof is 5 or less,
   the count of particles having a diameter of 1 $\mu$m or more in the metal oxide layer per 100 $\mu$m$^2$ thereof is 5 or less, and
   the anode for water electrolysis has the double layer capacitance, determined as described in the description, of 0.15 F/cm$^2$ or more and 1.5 F/cm$^2$ or less.

7. The anode (2a) according to any one of claims 1 to 6, wherein the metal oxide layer has a thickness of 1 $\mu$m or more and 50 $\mu$m or less.

8. The anode (2a) according to any one of claims 1 to 7, wherein

   the metal oxide layer contains particles having an average primary grain size of 10 nm or more and 500 nm or less, and
   the crystalline size D of the perovskite-structured metal oxide in the metal oxide layer is 5 nm or more and 50 nm or less.

9. The anode (2a) according to any one of claims 1 to 8, wherein the metal oxide layer has a porosity of 40% or less.

**10.** The anode (2a) according to any one of claims 1 to 9, wherein the perovskite-structured metal oxide contains nickel element, preferably wherein the perovskite-structured metal oxide is a metal oxide having a composition represented by Formula (1):

$$A_xA'_{(1-x)}Ni_yB'_{(1-y)}O_{(3-z)} \dots \qquad (1)$$

in Formula (1), each of A and A' is an alkali earth metal or rare earth element,
B' is one of Cr, Mn, Fe, Co, and Cu, x satisfies $0 \leq x \leq 1$, y satisfies $0 < y \leq 1$, and z satisfies $0 < z \leq 1$.

**11.** The anode (2a) according to claim 10, wherein the valence of nickel in the metal oxide layer is 2.5 or more and less than 3.0.

**12.** The anode (2a) according to any one of claims 1 to 11, wherein the content of the perovskite metal oxide in the crystalline constituent in the metal oxide layer after an energization of 100 hours or longer at an oxygen-generating potential is 80% or more and 95% or less.

**13.** An electrolysis cell (65) comprising the anode (2a) according to any one of claims 1 to 12.

**14.** A hydrogen production method for producing hydrogen by electrolyzing water containing an alkali in an electrolyzer (50), wherein

the electrolyzer (50) comprises at least an anode (2a) and a cathode (2c),
wherein the anode (2a) is defined in any one of claims 1 to 12.

**Patentansprüche**

**1.** Anode (2a), umfassend:

ein poröses Nickelsubstrat; und
eine Metalloxidschicht, die wenigstens ein Metalloxid mit Perowskit-Struktur auf oder oberhalb eines Teils einer Oberfläche oder der gesamten Oberfläche des porösen Nickelsubstrats enthält,
wobei der Gehalt an dem Metalloxid mit Perowskit-Struktur in dem kristallinen Bestandteil in der Metalloxidschicht 90% oder mehr und 100% oder weniger beträgt, und
**dadurch gekennzeichnet, dass** die Anode eine Doppelschichtkapazität, die so bestimmt wird, wie es in der Beschreibung beschrieben ist, von 0,15 F/cm$^2$ oder mehr und 1,5 F/cm$^2$ oder weniger aufweist.

**2.** Anode (2a) gemäß Anspruch 1, weiterhin umfassend eine Nickeloxidschicht zwischen dem porösen Nickelsubstrat und der Metalloxidschicht, wobei die Nickeloxidschicht eine Dicke von 0,1 µm oder mehr und 1,0 µm oder weniger aufweist.

**3.** Anode (2a) gemäß Anspruch 1 oder 2, wobei das poröse Nickelsubstrat ein Öffnungsverhältnis von 20% oder mehr und 80% oder weniger aufweist und/oder
wobei das poröse Nickelsubstrat eine Dicke von 0,2 mm oder mehr und 2,0 mm oder weniger aufweist.

**4.** Anode (2a) gemäß einem der Ansprüche 1 bis 3, wobei das poröse Nickelsubstrat ein Streckmetall ist, wobei vorzugsweise das Streckmetall eine Dimension, die einen kurzen Weg der Masche (SW) von 2 mm oder mehr und 5 mm oder weniger und einen langen Weg der Masche (LW) von 3 mm oder mehr und 10 mm oder weniger umfasst.

**5.** Anode (2a) gemäß einem der Ansprüche 1 bis 4, wobei die Anzahl von Poren mit einem Durchmesser von 1 µm oder mehr in der Metalloxidschicht pro 100 µm$^2$ derselben 5 oder weniger beträgt oder
wobei die Anzahl von Teilchen mit einem Durchmesser von 1 µm oder mehr in der Metalloxidschicht pro 100 µm$^2$ derselben 5 oder weniger beträgt.

**6.** Anode (2a) gemäß einem der Ansprüche 1 bis 4, wobei

die Anzahl von Poren mit einem Durchmesser von 1 µm oder mehr in der Metalloxidschicht pro 100 µm$^2$ derselben 5 oder weniger beträgt,

die Anzahl von Teilchen mit einem Durchmesser von 1 $\mu$m oder mehr in der Metalloxidschicht pro 100 $\mu$m$^2$ derselben 5 oder weniger beträgt und die Anode für Wasserelektrolyse eine Doppelschichtkapazität, die so bestimmt wird, wie es in der Beschreibung beschrieben ist, von 0,15 F/cm$^2$ oder mehr und 1,5 F/cm$^2$ oder weniger aufweist.

7. Anode (2a) gemäß einem der Ansprüche 1 bis 6, wobei die Metalloxidschicht eine Dicke von 1 $\mu$m oder mehr und 50 $\mu$m oder weniger aufweist.

8. Anode (2a) gemäß einem der Ansprüche 1 bis 7, wobei

die Metalloxidschicht Teilchen mit einer mittleren Primärteilchengröße von 10 nm oder mehr und 500 nm oder weniger enthält und
die Kristallgröße D des Metalloxids mit der Perowskit-Struktur in der Metalloxidschicht 5 nm oder mehr und 50 nm oder weniger beträgt.

9. Anode (2a) gemäß einem der Ansprüche 1 bis 8, wobei die Metalloxidschicht eine Porosität von 40% oder weniger aufweist.

10. Anode (2a) gemäß einem der Ansprüche 1 bis 9, wobei das Metalloxid mit der Perowskit-Struktur das Element Nickel enthält, wobei vorzugsweise das Metalloxid mit der Perowskit-Struktur ein Metalloxid ist, das eine Zusammensetzung aufweist, die durch Formel (1) dargestellt wird:

$$A_xA'_{(1-x)}Ni_yB'_{(1-y)}O_{(3-z)} \dots \qquad (1),$$

wobei in Formel (1) A und A' jeweils ein Erdalkalimetall oder ein Seltenerdelement ist, B' eines aus Cr, Mn, Fe, Co und Cu ist, x die Bedingung $0 \le x \le 1$ erfüllt, y die Bedingung $0 < y \le 1$ erfüllt und z die Bedingung $0 < z \le 1$ erfüllt.

11. Anode (2a) gemäß Anspruch 10, wobei die Wertigkeit von Nickel in der Metalloxidschicht 2,5 oder mehr und weniger als 3,0 beträgt.

12. Anode (2a) gemäß einem der Ansprüche 1 bis 11, wobei der Gehalt an dem Perowskit-Metalloxid in dem kristallinen Bestandteil in der Metalloxidschicht nach 100 Stunden oder länger Bestromung mit einem sauerstofferzeugenden Potential 80% oder mehr und 95% oder weniger beträgt.

13. Elektrolysezelle (65), umfassend die Anode (2a) gemäß einem der Ansprüche 1 bis 12.

14. Wasserstoffproduktionsverfahren zum Herstellen von Wasserstoff durch Elektrolysieren von Wasser, das eine Base enthält, in einem Elektrolyseur (50), wobei

der Elektrolyseur (50) wenigstens eine Anode (2a) und eine Kathode (2c) umfasst,
wobei die Anode (2a) in einem der Ansprüche 1 bis 12 definiert ist.

## Revendications

1. Anode (2a), comprenant :

un substrat en nickel poreux ; et
une couche d'oxyde de métal contenant au moins un oxyde de métal à structure perovskite sur ou au-dessus d'une partie d'une surface ou la surface entière du substrat en nickel poreux,
dans laquelle la teneur de l'oxyde de métal à structure perovskite dans le constituant cristallin dans la couche d'oxyde de métal est de 90 % ou supérieure et 100 % ou inférieure, et
**caractérisée en ce que** l'anode présente une capacitance à double couche, déterminée comme décrit dans la description, de 0,15 F/cm$^2$ ou supérieure et 1,5 F/cm$^2$ ou inférieure.

2. Anode (2a) selon la revendication 1, comprenant de plus une couche d'oxyde de nickel entre le substrat de nickel poreux et la couche d'oxyde de métal, la couche d'oxyde de nickel ayant une épaisseur de 0,1 $\mu$m ou supérieure et 1,0 $\mu$m ou inférieure.

3. Anode (2a) selon la revendication 1 ou 2, dans laquelle le substrat en nickel poreux présente un rapport d'ouverture de 20 % ou supérieur et 80 % ou inférieur, et/ou dans laquelle le substrat en nickel poreux présente une épaisseur de 0,2 mm ou supérieure et 2,0 mm ou inférieure.

4. Anode (2a) selon l'une quelconque des revendications 1 à 3, dans laquelle le substrat en nickel poreux est un métal expansé, de préférence dans laquelle le métal expansé présente une dimension comprenant une voie courte de maillage (SW) de 2 mm ou supérieure et 5 mm ou inférieure, et une voie longue de maillage (LW) de 3 mm ou supérieure et 10 mm ou inférieure.

5. Anode (2a) selon l'une quelconque des revendications 1 à 4, dans laquelle le compte de pores ayant un diamètre de 1 $\mu$m ou supérieur dans la couche d'oxyde de métal pour 100 $\mu$m$^2$ de celle-ci est de 5 ou inférieur, ou dans laquelle le compte de particules ayant un diamètre de 1 $\mu$m ou supérieur dans la couche d'oxyde de métal pour 100 $\mu$m$^2$ de celle-ci est de 5 ou inférieur.

6. Anode (2a) selon l'une quelconque des revendications 1 à 4, dans laquelle

le compte de pores ayant un diamètre de 1 $\mu$m ou supérieur dans la couche d'oxyde de métal pour 100 $\mu$m$^2$ de celle-ci est de 5 ou inférieur,
le compte de particules ayant un diamètre de 1 $\mu$m ou supérieur dans la couche d'oxyde de métal pour 100 $\mu$m$^2$ de celle-ci est de 5 ou inférieur, et
l'anode pour électrolyse d'eau présente la capacitance à double couche déterminée comme décrit dans la description, de 0,15 F/cm$^2$ ou supérieure et 1,5 F/cm$^2$ ou inférieure.

7. Anode (2a) selon l'une quelconque des revendications 1 à 6, dans laquelle la couche d'oxyde de métal présente une épaisseur de 1 $\mu$m ou supérieure et 50 $\mu$m ou inférieure.

8. Anode (2a) selon l'une quelconque des revendications 1 à 7, dans laquelle

la couche d'oxyde de métal contient des particules ayant une taille moyenne de grain primaire de 10 nm ou supérieure et 500 nm ou inférieure, et
la taille cristalline D de l'oxyde de métal à structure perovskite dans la couche d'oxyde de métal est de 5 nm ou supérieure et 50 nm ou inférieure.

9. Anode (2a) selon l'une quelconque des revendications 1 à 8, dans laquelle la couche d'oxyde de métal présente une porosité de 40 % ou inférieure.

10. Anode (2a) selon l'une quelconque des revendications 1 à 9, dans laquelle l'oxyde de métal à structure perovskite contient un élément de nickel, de préférence dans laquelle l'oxyde de métal à structure perovskite est un oxyde de métal ayant une composition représentée par la formule (1) :

$$A_xA'_{(1-x)}Ni_yB'_{(1-y)}O_{(3-z)} \ldots \quad\quad (1)$$

dans la formule (1), chacun de A et A' est un élément de métal alcalino-terreux ou de terres rares,
B' est un de Cr, Mn, Fe, Co, et Cu, x satisfait $0 \leq x \leq 1$, y satisfait $0 < y \leq 1$, et z satisfait $0 < z \leq 1$.

11. Anode (2a) selon la revendication 10, dans laquelle la valence de nickel dans la couche d'oxyde de métal est de 2,5 ou supérieure et inférieure à 3,0.

12. Anode (2a) selon l'une quelconque des revendications 1 à 11, dans laquelle la teneur de l'oxyde de métal de perovskite dans le constituant cristallin dans la couche d'oxyde de métal après une énergisation de 100 heures ou supérieure à un potentiel de production d'oxygène est de 80 % ou supérieure et 95 % ou inférieure.

13. Cellule d'électrolyse (65) comprenant l'anode (2a) selon l'une quelconque des revendications 1 à 12.

14. Procédé de production d'hydrogène pour produire de l'hydrogène par électrolyse d'eau contenant un alcali dans un électrolyseur (50), dans lequel

l'électrolyseur (50) comprend au moins une anode (2a) et une cathode (2c),

dans lequel l'anode (2a) est définie dans l'une quelconque des revendications 1 à 12.

# FIG. 1

# FIG.2

# FIG.3

# *FIG. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016071967 A
- JP 2009179871 A
- WO 2014147720 A
- WO 2016147720 A

### Non-patent literature cited in the description

- Manufacturing of a IaNiO3composite electrode for oxygen evolution in commercial alkaline water electrolysis. **EGELUND SUNE et al.** INTERNATIONAL JOURNAL OF HYDROGEN ENERGY. ELSEVIER SCIENCE PUBLISHERS B.V, 24 May 2016, vol. 41, 10152-10160

- **SUNTIVICH, JIN et al.** A perovskite oxide optimized for oxygen evolution catalysis from molecular orbital principles. *Science,* 2011, vol. 334 (6061), 1383-1385
- **SINGH, S. P. et al.** Physicochemical and electrochemical characterization of active films of LaNiO3 for use as anode in alkaline water electrolysis. *International journal of hydrogen energy,* 1995, vol. 20 (3), 203-210